(19) Europäisches Patentamt
European Patent Office
Office européen des brevets

(11) EP 2 157 646 A1

(12) EUROPEAN PATENT APPLICATION
published in accordance with Art. 153(4) EPC

(43) Date of publication:
24.02.2010 Bulletin 2010/08

(21) Application number: 08764929.9

(22) Date of filing: 30.05.2008

(51) Int Cl.:
*H01M 8/02* (2006.01) *C08F 297/04* (2006.01)
*H01B 1/06* (2006.01) *H01M 8/10* (2006.01)

(86) International application number:
PCT/JP2008/060061

(87) International publication number:
WO 2008/149815 (11.12.2008 Gazette 2008/50)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 04.06.2007 JP 2007147641

(71) Applicants:
- Kuraray Co., Ltd.
Kurashiki-shi
Okayama 710-0801 (JP)
- Tokyo Institute of Technology
Tokyo 152-8550 (JP)

(72) Inventors:
- OHGI, Hiroyuki
Tsukuba-shi
Ibaraki 305-0841 (JP)
- ONO, Tomohiro
Tsukuba-shi
Ibaraki 305-0841 (JP)
- NAKAI, Shinji
Tsukuba-shi
Ibaraki 305-0841 (JP)
- NAKANO, Takeshi
Tsukuba-shi
Ibaraki 305-0841 (JP)
- ISHIZONE, Takashi
Tokyo 152-8550 (JP)

(74) Representative: Müller-Boré & Partner
Patentanwälte
Grafinger Strasse 2
81671 München (DE)

# (54) POLYMER ELECTROLYTE, POLYMER ELECTROLYTE MEMBRANE, MEMBRANE-ELECTRODE ASSEMBLY, AND SOLID POLYMER FUEL CELL

(57) A polymer electrolyte comprising as a main ingredient a block/graft copolymer which comprises, as its constituents, a polymer block (A), a polymer block (B) and a polymer block (C) which mutually phase separate, and in which block/graft copolymer, (A) has as a main repeating unit a vinyl compound unit and has ion-conductive groups, (B) has as a main repeating unit a vinyl compound unit capable of forming a flexible phase and forms a flexible phase, and (C) has as a main repeating unit a styrene derivative unit having an alicyclic hydrocarbon group having a polycyclic structure and forms a restraining phase; a membrane; a membrane-electrode assembly; and a polymer electrolyte fuel cell. The polymer electrolyte has advantages that it is excellent in durability and heat resistance; small in dimensional change between the times of being dry and wet, change of dynamic characteristics and change of characteristics such as methanol permeability between before and after methanol solution immersion treatment; capable of being used stably in long-time operation of polymer electrolyte fuel cells and is excellent in starting properties in the cells; and so on.

EP 2 157 646 A1

## Description

### TECHNICAL FIELD

This invention relates to a polymer electrolyte excellent in durability and heat resistance, a polymer electrolyte membrane comprising the polymer electrolyte, and a membrane-electrode assembly and a polymer electrolyte fuel cell in both of which the polymer electrolyte membrane is used.

### BACKGROUND ART

In recent years, as a radical solution of energetic and/or environmental problems, and, further, as a central energy conversion system in the future age of hydrogen energy, fuel cell technique has drawn attention. Especially, polymer electrolyte fuel cells (PEFC) are tried to be applied as power sources for electric vehicles, power sources for portable devices, and, further, applied to domestically stationary power source apparatuses utilizing electricity and heat at the same time, for the reason that miniaturization and lightening are possible, etc.

A polymer electrolyte fuel cell is generally composed as follows. First, on both sides of a polymer electrolyte membrane having ion conductivity, catalyst layers comprising a platinum group metal catalyst supported on carbon powder and an ion-conductive binder comprising a polymer electrolyte are formed, respectively. On the outsides of the catalyst layers, gas diffusion layers as porous materials through which fuel gas and oxidant gas can pass are formed, respectively. As the gas diffusion layers, carbon paper, carbon cloth, etc. are used. An integrated combination of the catalyst layer and the gas diffusion layer is called a gas diffusion electrode, and a structure wherein a pair of gas diffusion electrodes are bonded to the electrolyte membrane so that the catalyst layers can face to the electrolyte membrane, respectively, is called a membrane-electrode assembly (MEA). On both sides of the membrane-electrode assembly, separators having electric conductivity and gastightness are placed. Gas passage(s) supplying the fuel gas or oxidant gas (e.g., air) onto the electrode surfaces is/are formed, respectively, at the contact parts of the membrane-electrode assembly and the separators or inside the separators. Power generation is started by supplying a fuel gas such as hydrogen or methanol to one electrode (fuel electrode) and an oxidant gas containing oxygen such as air to the other electrode (oxygen electrode). Namely, the fuel gas is ionized at the fuel electrode to form protons and electrons, the protons pass through the electrolyte membrane and transferred to the oxygen electrode, the electrons are transferred via an external circuit formed by connecting both electrodes into the oxygen electrode, and they react with the oxidant gas to form water. Thus, the chemical energy of the fuel gas is directly converted into electric energy which can be taken out.

For practical implementation and spread of polymer electrolyte fuel cells, as to the aspect of performance, in addition to high power generation performance, it is important that they can be operated stably for a long time. Generally, a polymer electrolyte fuel cell is not continuously operated, and start, operation and stop are repeated. During operation, the polymer electrolyte membrane is under a wet state, but during stop, lowering of humidity tends to occur. Thus, an electrolyte membrane having small dimensional change and small change of dynamic characteristics between under low humidity (during being dried) and under a wet state is desired. In addition, an electrolyte membrane having such excellent starting properties that certain characteristics can be attained immediately after the operation environment is changed, for example that stable operation is possible immediately after start, is desired.

In polymer electrolyte fuel cells using methanol as a fuel, the structure of the electrolyte membrane, particularly the structure of ion channels formed by aggregation of sulfonic acid groups as an ion-conductive group is liable to change, and, thus, power generation characteristics are also liable to change. Therefore, an electrolyte membrane is desired which has small change of characteristics, particularly characteristics such as methanol permeability and ion conductivity between before and after power generation (in the electrolyte membrane, corresponding to before and after immersion in a methanol solution).

Further, since it is desired in view of improvement of electrode activity and so on that the operation temperature is high, an electrolyte membrane excellent in heat resistance is desired. In addition, also from the reason that in production of membrane electrode assemblies a compression bonding process by a hot press is frequently adopted, such an electrolyte membrane excellent in heat resistance that performance does not change during the process is desired.

As a polymer electrolyte membrane for polymer electrolyte fuel cells, Nafion (registered trade mark of Dupont Co., as is the same hereinafter), which is a perfluorocarbonsulfonic acid polymer, is used by reason of being chemically stable. However, since Nafion has a property that change of dynamic characteristics (tensile characteristics, etc.) between during a dry state and during a wet state is large, performance tends to be lowered during a long-time power generation test. In addition, since Nafion is a fluoropolymer, consideration to the environment at the time of its synthesis and disposal is necessary, and fluoropolymers are expensive. Therefore, development of novel electrolyte membranes is desired.

In order to solve the above problems, many non-fluoropolymer-based polymer electrolyte membranes are proposed in place of perfluorocarbonsulfonic acid polymer electrolyte membranes. For example, one derived from a

polymer electrolyte obtained by sulfonating a poly(ether ether ketone)(PEEK) as a heat resistant aromatic polymer (Patent Document 1), one derived from a polymer electrolyte obtained by sulfonating a poly(ether sulfone)(PES) as a heat resistant aromatic polymer (Non-patent Document 1), etc. However, it is the actual situation that generally, in sulfonated aromatic polymers, the introduction amount of a sulfonic acid group is increased in order to heighten ion conductivity, but, as a result, the polymer electrolyte membrane tends to be swollen and change of dynamic characteristics (tensile characteristics) between during a dry state and during a wet state is larger.

On the other hand, there is also proposed an electrolyte membrane wherein the polystyrene block of a block copolymer composed of styrene and a rubber component is sulfonated to make the polystyrene block function as ion-conductive channels. For example, in Patent document 2, as an inexpensive and mechanically and chemically stable polymer electrolyte membrane is proposed a polymer electrolyte membrane comprising a sulfonated SEBS (SEBS is an abbreviation of a polystyrene-poly (ethylene-butylene)-polystyrene triblock copolymer). However, as a result of an actual test by the present inventors, it was revealed that, also in these polymer electrolyte membranes, change of dynamic characteristics (tensile characteristics, etc.) between during a dry state and during a wet state is large, and, moreover, characteristics such as methanol permeability and ion conductivity are changed largely between before and after treatment of immersion in a methanol solution. By the fact that change of these characteristics is large, it is meant that when such a membrane is used in a polymer electrolyte fuel cell, time during which stable operation is possible is limited.

Thus, it is the actual situation that, in polymer electrolyte fuel cells, there has not yet been proposed a polymer electrolyte membrane for polymer electrolyte fuel cells which can operate stably at the time of a long-time operation and is excellent in durability and heat resistance.

Patent document 1: JP-A-6-93114
Patent document 2: JP-A-10-503788
Non-patent document 1: J. Membrane Science 197 (2002) 231

## DISCLOSURE OF INVENTION

### PROBLEMS TO BE SOLVED BY THE INVENTION

The object of this invention is to provide a polymer electrolyte which is economical, environment-friendly, excellent in moldability, durability and heat resistance, and, particularly, is capable of being used stably at the time of a long-time operation in polymer electrolyte fuel cells, has only small change in dimensions and dynamic characteristics (tensile characteristics, etc.) between during a dry state and during a wet state, has only small change in characteristics such as methanol permeability between before and after immersion in a methanol solution, and is also excellent in starting properties; a polymer electrolyte membrane comprising the polymer electrolyte; and a membrane-electrode assembly and a polymer electrolyte fuel cell both of which use the polymer electrolyte membrane.

### MEANS FOR SOLVING THE PROBLEMS

The present inventors have intensely studied for solving the above problems, and as a result, they found that a polymer electrolyte comprising as a main ingredient a block copolymer comprising, as its constituents, three specific polymer blocks which mutually phase separate and have an ion conductivity function, a flexibility function, and a heat resistance and structure-holding (restraining) function, respectively, can solve the above problems, and completed the invention.

Thus, this invention relates to a polymer electrolyte comprising as a main ingredient a block copolymer or graft copolymer which comprises, as its constituents, a polymer block (A), a polymer block (B) and a polymer block (C) which mutually phase separate, and in which block copolymer or graft copolymer, the polymer block (A) has as a main repeating unit a vinyl compound unit and has ion-conductive groups, the polymer block (B) has as a main repeating unit a vinyl compound unit capable of forming a flexible phase and forms a flexible phase, and the polymer block (C) has as a main repeating unit a styrene derivative unit represented by the following general formula (I) and forms a restraining phase

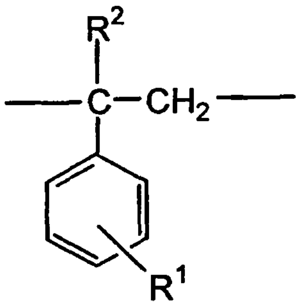

(I)

wherein $R^1$ represents an alicyclic hydrocarbonic group having a polycyclic structure, and $R^2$ represents a hydrogen atom, an alkyl group having 1 to 10 carbon atoms or an aryl group.

In the above block copolymer or graft copolymer, polymer blocks (A), (B) and (C) have properties that polymer block (A) as having polar groups, and polymer block (B) and polymer block (C) as respectively having the same or analogous structure, mutually phase separate, and polymer blocks (A) themselves, polymer blocks (B) themselves and polymer blocks (C) themselves gather, respectively.

Since polymer block (A) has ion-conductive groups, ion channels are formed by gathering of polymer blocks (A) themselves and function as paths of ions. Since polymer block (B) functions as a flexible phase having no substantial ion-conductive group, in production of membrane electrode assemblies and polymer electrolyte fuel cells, moldability (assembling properties, bonding properties, fastening properties, etc.) is improved. Since polymer block (C) functions as a restraining phase having no substantial ion-conductive group, dimensional stability, shape and form stability, durability, heat resistance, dynamic characteristics in a wet state, etc. are improved.
The ion-conductive group includes a sulfonic acid group and phosphonic acid group and their salts.
The present invention also relates to a membrane obtained from the polymer electrolyte, and a membrane-electrode assembly and a polymer electrolyte fuel cell both of which uses the membrane.

## EFFECT OF THE INVENTION

The polymer electrolyte of the invention has such characteristics that it is economical, environment-friendly, excellent in moldability; and, moreover, is excellent in durability and heat resistance, and can attain stable performance for a long time because it has characteristics that change of dimensions and change of dynamic characteristics (tensile characteristics, etc.) between in a dry state and in a wet state are small, and change of characteristics such as methanol permeability between before and after a treatment of immersion in a methanol solution is small. Furthermore, the polymer electrolyte is also excellent in starting properties because it has a characteristic that certain performance can be attained immediately after an operation circumstance of being dried and being wet is changed. Therefore, a membrane obtained from the polymer electrolyte and a membrane-electrode assembly using the membrane can attain excellent performance in polymer electrolyte fuel cells.

## BEST MODE FOR CARRYING OUT THE INVENTION

The block copolymer or graft copolymer composing the polymer electrolyte of the invention contains as one of its constituents a polymer block (A) which has as a main repeating unit a vinyl compound unit and ion-conductive groups. As the vinyl compound unit, an aromatic vinyl compound unit is preferred, and as the aromatic vinyl compound unit, a unit represented by the following general formula (II) is preferred:

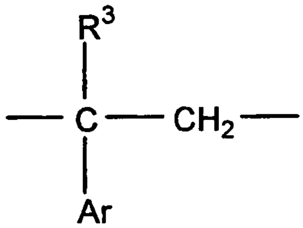

(II)

wherein Ar represents an aryl group having 6 to 14 carbon atoms which can have 1 to 3 substituents, $R^3$

represents a hydrogen atom, an alkyl group having 1 to 4 carbon atoms or an aryl group having 6 to 14 carbon atoms which can have 1 to 3 substituents. The main repeating unit can be composed of one kind selected from the units represented by the general formula (II) or two kinds or more therefrom.

As the aryl group having 6 to 14 carbon atoms in the definition of Ar, there can be mentioned phenyl, naphthyl, phenanthryl, anthryl, indenyl, biphenylyl, etc. As the substituents in the case wherein the aryl group has 1 to 3 substituents, there can be mentioned, respectively independently, straight-chain or branched alkyl groups having 1 to 4 carbon atoms (methyl, ethyl, propyl, isopropyl, butyl, etc.), halogenated alkyl groups having 1 to 4 carbon atoms (chloromethyl, 2-chloroethyl, 3-chloropropyl, etc.), etc.

The alkyl group having 1 to 4 carbon atoms in the definition of $R^3$ can be straight-chain or branched, and there can be mentioned methyl, ethyl, propyl, isopropyl, n-butyl, isobutyl, tert-butyl, etc. As the aryl group having 6 to 14 carbon atoms in the definition of $R^3$, there can be mentioned the same ones as in the aryl group having 6 to 14 carbon atoms which can have 1 to 3 substituents, in the definition of Ar.

When $R^3$ is an alkyl groups having 1 to 4 carbon atoms, it is most preferred that Ar does not have any substituent, but when Ar has substituent(s), the number of the substituent(s) is preferably 1 or 2 and more preferably 1. When $R^3$ is an aryl group having 6 to 14 carbon atoms, it is most preferred that both or one of this aryl group and Ar does not have any substituent, but when both have substituent(s), the number of the substituent(s) is preferably 1 or 2 and more preferably 1.

As specific examples of aromatic vinyl compounds giving the aromatic vinyl compound unit represented by the general formula (II), there can be mentioned styrene, vinylnaphthalene, vinylanthracene, vinylphenanthrene, vinylbiphenyl, α-methylstyrene, 1-methyl-1-naphthylethylene, 1-methyl-1-biphenylylethylene, etc., and styrene and α-methylstyrene are particularly preferred.

Aromatic vinyl compounds giving the aromatic vinyl compound unit can be used alone or in a combination of two or more. The form of copolymerization in the case wherein two or more of them are copolymerized can be random copolymerization, block copolymerization, graft copolymerization or tapered copolymerization.

Polymer block (A) can contain one or plural monomer units other than aromatic vinyl compound units in such a range that the effects of the invention are not spoiled. As monomers giving such other monomer units, there can, for example, be mentioned conjugated alkadienes having 4 to 8 carbon atoms (specific examples are the same as in the description of polymer block (B) mentioned later); alkenes having 2 to 8 carbon atoms (specific examples are the same as in the description of polymer block (B) mentioned later); (meth)acrylic esters (methyl (meth)acrylate, ethyl (meth) acrylate, butyl (meth)acrylate, etc.); vinyl esters (vinyl acetate, vinyl propionate, vinyl butyrate, vinyl pivalate, etc.); vinyl ethers (methyl vinyl ether, isobutyl vinyl ether, etc.); etc. The form of copolymerization of the aromatic vinyl compound with said other monomer(s) needs to be random copolymerization.

In view of giving sufficient ion conductivity, the proportion of the aromatic vinyl compound unit represented by the general formula (II) in polymer block (A) is preferably 50 % by mol or more, more preferably 60 % by mol or more and still more preferably 80 % by mol or more.

The molecular weight of polymer block (A) in such a state that ion-conductive groups are not introduced is appropriately chosen depending on the nature and state, desired performance, other polymer components, etc. of the polymer electrolyte, but, usually, the molecular weight is preferably chosen between 100 and 1,000,000, and more preferably chosen between 500 and 100,000, as number average molecular weight in terms of polystyrene.

Polymer block (A) can be cross-linked according to a known method in such a range that the effects of the invention are not spoiled. By introduction of cross-linking, such a tendency occurs that ion channel phases formed by polymer block (A) are hard to swell, and change of dynamic characteristics (tensile characteristics, etc.) between in a dry state and in a wet state, and, further, change of characteristics such as methanol permeability and/or ion conductivity between before and after treatment of immersion in a methanol solution are further diminished.

The block copolymer used in the polymer electrolyte of the invention has, besides polymer block (A), a polymer block (B) which has as a main repeating unit a vinyl compound unit capable of forming a flexible phase and forms a flexible phase, and by having polymer block (B), the block copolymer takes on elasticity and becomes flexible as a whole, and in production of membrane electrode assemblies and polymer electrolyte fuel cells, moldability (assembling properties, bonding properties, fastening properties, etc.) is improved. Polymer block (B) herein referred to is a so-called rubber-like polymer block having a glass transition point or softening point of 50°C or less, preferably 20°C or less and more preferably 10°C or less.

As vinyl compound units capable of forming flexible phases, there can be mentioned alkene units each having 2 to 8 carbon atoms, cycloalkene units each having 5 to 8 carbon atoms, vinylcycloalkene units each having 7 to 10 carbon atoms, conjugated alkadiene units each having 4 to 8 carbon atoms and conjugated cycloalkadiene units each having 5 to 8 carbon atoms; vinylcycloalkene units each having 7 to 10 carbon atoms wherein part or all of carbon-carbon double bonds are hydrogenated, conjugated alkadiene units each having 4 to 8 carbon atoms wherein part or all of carbon-carbon double bonds are hydrogenated, conjugated cycloalkadiene units each having 5 to 8 carbon atoms wherein part or all of carbon-carbon double bonds are hydrogenated, acrylic ester units, vinyl ester units, vinyl ether

units, etc. Vinyl compounds giving these units can be used alone or in a combination of two or more. The form of copolymerization in the case wherein two or more of them are copolymerized can be random copolymerization, block copolymerization, graft copolymerization or tapered copolymerization. When a monomer used in the (co)polymerization has two carbon-carbon double bonds, any of them can be used in the polymerization, and in the case of a conjugated alkadiene either of 1,2-bond and 1,4-bond can be used in the polymerization, and so long as the glass transition point or softening point is 50°C or less, there is no particular limitation on the proportion between 1,2-bond and 1,4-bond.

In view of giving flexibility, elasticity, and thus good moldability, in production of membrane electrode assemblies and polymer electrolyte fuel cells, to block copolymers or graft copolymers to be obtained, polymer block (B) is preferably a polymer block comprising as a main repeating unit at least one unit selected from alkene units each having 2 to 8 carbon atoms, cycloalkene units each having 5 to 8 carbon atoms, vinylcycloalkene units each having 7 to 10 carbon atoms, conjugated alkadiene units each having 4 to 8 carbon atoms, conjugated cycloalkadiene units each having 5 to 8 carbon atoms, vinycycloalkenes units each having 7 to 10 carbon atoms wherein part or all of the carbon-carbon double bonds are hydrogenated, conjugated alkadiene units each having 4 to 8 carbon atoms wherein part or all of the carbon-carbon double bonds are hydrogenated, and conjugated cycloalkadiene units each having 5 to 8 carbon atoms wherein part or all of the carbon-carbon double bonds are hydrogenated. From the above viewpoint, polymer block (B) is more preferably a polymer block comprising at least one unit selected from alkene units each having 2 to 8 carbon atoms, conjugated alkadiene units each having 4 to 8 carbon atoms, and conjugated alkadiene units each having 4 to 8 carbon atoms wherein part or all of the carbon-carbon double bonds are hydrogenated. From the above viewpoint, polymer block (B) is still more preferably a polymer block comprising at least one unit selected from alkene unit each having 2 to 6 carbon atoms, conjugated alkadiene units each having 4 to 8 carbon atoms, and conjugated alkadiene units each having 4 to 8 carbon atoms wherein part or all of the carbon-carbon double bonds are hydrogenated. In the above, most preferably as the alkene unit is an isobutene unit, and most preferably as the conjugated alkadiene unit is a 1, 3-butadiene unit and/or an isoprene unit.

When the main repeating unit of polymer block (B) has a carbon-carbon double bond as in a vinylcycloalkene unit, a conjugated alkadiene unit or a conjugated cycloalkadiene unit, it is preferred that 30 % by mol or more of the carbon-carbon double bonds is hydrogenated, it is further preferred that 50 % by mol or more thereof is hydrogenated, and it is still further preferred that 80 % by mol or more thereof is hydrogenated, in view of enhancement of the power generation performance, heat deterioration resistance, etc. of membrane electrode assemblies using the polymer electrolyte membrane of the invention. The proportion of hydrogenation of the carbon-carbon double bonds can be calculated according to a method generally used, for example, a method of measuring iodine number, $^1$H-NMR measurement, or the like.

Vinyl compounds giving a vinyl compound unit capable of forming the above flexible phase in polymer block (B) are described. Alkenes having 2 to 8 carbon atoms include ethylene, propylene, 1-butene, 2-butene, isobutene, 1-pentene, 2-pentene, 1-hexene, 2-hexene, 1-heptene, 2-heptene, 1-octene, 2-octene, etc.; cycloalkenes having 5 to 8 carbon atoms include cyclopentene, cyclohexene, cycloheptene and cyclooctene; vinylcycloalkenes having 7 to 10 carbon atoms include vinylcyclopentene, vinylcyclohexene, vinylcycloheptene, vinylcyclooctene, etc.; conjugated alkadienes having 4 to 8 carbon atoms include 1,3-butadiene, 1,3-pentadiene, isoprene, 1,3-hexadiene, 2,4-hexadiene, 2,3-dimethyl-1,3-butadiene, 2-ethyl-1,3-butadiene, 1,3-heptadiene, 1,4-heptadiene, 3,5-heptadiene, etc.; and conjugated cycloalkadienes having 5 to 8 carbon atoms include cyclopentadiene, 1,3-cyclohexadiene, etc. Further, acrylic esters include methyl acrylate, ethyl acrylate, butyl acrylate, etc.; vinyl esters include vinyl acetate, vinyl propionate, vinyl butyrate, vinyl pivalate, etc.; and vinyl ethers include methyl vinyl ether, isobutyl vinyl ether, etc.

Polymer block (B) can contain, besides the above vinyl compound unit capable of forming a flexible phase, other monomer unit(s), for example aromatic vinyl compound unit(s) mentioned in the description of polymer block (A) or a halogen-containing vinyl compound unit(s) such as a vinyl chloride unit, so long as the purposes of polymer block (B) of giving flexibility and/or elasticity to the block copolymer or graft copolymer are not spoiled. In this case, the form of the copolymerization of the vinyl compound capable of forming a flexible phase with other monomer(s) needs to be random copolymerization. The use amount of such other monomer(s) is preferably less than 50 % by mass, more preferably less than 30 % by mass, still more preferably less than 10 % by mass, based on the total of the vinyl compound capable of forming a flexible phase and said other monomer(s).

The block copolymer used in the polymer electrolyte of the invention has, besides polymer block (A) and polymer block (B), a polymer block (C) which is a polymer block having as a main repeating unit a styrene derivative unit represented by the general formula (I) and forms a restraining phase (a phase functioning so as to hold phase separation structure of the block copolymer). As stated in the item of BACKGROUND ART, in polymer electrolyte fuel cells, change of humidity is liable to occur between during operation and during stop, and a polymer electrolyte membrane wherein dimensional change and/or change of dynamic characteristics (tensile strength, etc.) in the meantime are/is small is sought, and, further, a polymer electrolyte membrane is sought wherein change of characteristics, particularly characteristics such as methanol permeability and ion conductivity between before and after power generation, which, in direct methanol polymer electrolyte fuel cells, corresponds to before and after the treatment of immersion in a methanol solution,

is small, but, in general, these characteristics are lowered during long-time operation. The present invention aims to maintain these characteristics by using a polymer block (C) forming a restraining phase particularly excellent in heat resistance.

Compounds giving a styrene derivative unit represented by the general formula (I), which is a main repeating unit of polymer block (C), are styrene derivatives represented by the following general formula (I')

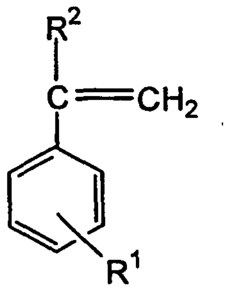

(I')

wherein $R^1$ and $R^2$ have the same meanings as in the aforementioned general formula (I), and, namely, $R^1$ represents an alicyclic hydrocarbonic group having a polycyclic structure, and $R^2$ represents a hydrogen atom, an alkyl group having 1 to 10 carbon atoms or an aryl group.

The "alicyclic hydrocarbonic group having a polycyclic structure" in the definition of $R^1$ means a hydrocarbonic group having two or more aliphatic rings (alicyclic rings). In view of making the heat resistance of the block copolymer or graft copolymer of the invention better, it is preferred that the alicyclic hydrocarbonic group having a polycyclic structure (hereinafter sometimes referred to as "polyalicyclic hydrocarbonic group"), i.e. $R^1$ is a bridged alicyclic hydrocarbonic group, namely a hydrocarbonic group wherein adjacent two alicyclic rings mutually have two or more carbon atoms in common. The polyalicyclic hydrocarbonic group $R^1$ can, in some cases, be such that one or two or more of the two or more alicyclic rings composing $R^1$ has/have aliphatic unsaturated bond(s). However, it is necessary that the aliphatic unsaturated bond(s) existing in the alicyclic rings does/do not participate in the polymerization, or is lower in polymerizability than the vinyl bond in the styrene derivative (I'). Otherwise, smooth polymerization of the styrene derivative tends to be inhibited.

As specific examples of polyalicyclic hydrocarbonic group $R^1$, there can be mentioned adamantyl (tricyclo [3.3.1.1$^{3,7}$]decyl), biadamantyl, norbornyl, isobornyl, bicyclononyl, bicyclo[2.1.0]pentyl, bicyclo[3.2.1]octyl, tricyclo [2.2.1.0$^{2,6}$]heptyl, etc. These polyalicyclic hydrocarbonic groups can, if needed, be substituted with alkyl group(s), halogen (s), alkoxy group(s) or the like.

The bond position of polyalicyclic hydrocarbonic group $R^1$ in the benzene ring can be any of the ortho-position, meta-position and para-position of the bond position of the vinyl bond [$-C(R^2)=CH_2$], but, preferred among them is the para-position in view of the polymerization reactivity of the styrene derivative.

In the general formula (I) or (I'), $R^2$ can be any of a hydrogen atom, an alkyl group having 1 to 10 carbon atoms or an aryl group. When $R^2$ is an alkyl group having 1 to 10 carbon atoms, it can be any of straight-chain and branched, and, specifically, there can be mentioned straight-chain alkyl groups such as methyl, ethyl, propyl, butyl, pentyl, hexyl, heptyl, octyl, nonyl and decyl, and branched alkyl groups such as isopropyl, isobutyl, sec-butyl, tert-butyl, isopentyl, neopentyl, tert-pentyl and 1-methylheptyl.

As specific examples when $R^2$ is an aryl group, there can be mentioned phenyl, naphthyl, etc., and these aryl groups can have 1 or 2 substituents such as alkyl groups each having 1 to 4 carbon atoms (methyl, ethyl, etc.), halogen atoms or alkoxyl groups each having 1 to 4 carbon atoms (methoxy, ethoxy, etc.).

Among the above-mentioned, it is preferred in view of easiness of preparation, polymerization reactivity, etc. of styrene derivative (I') that $R^2$ is an hydrogen atom, an alkyl group having 1 to 4 carbon atoms or an aryl group. Further, when the block copolymer/graft copolymer of the invention is used as a polymer electrolyte membrane in membrane electrode assemblies and further polymer electrolyte fuel cells, chemical stability, particularly radical resistance is sometimes needed, and in such a case, it is further preferred that $R^2$ is an alkyl group having 1 to 4 carbon atoms or an aryl group, and it is still further preferred in addition view of easiness of preparation and polymerization reactivity that $R^2$ is a methyl group.

As specific examples of styrene derivative (I'), there can be mentioned styrene derivatives represented by the following chemical formulae. In the following formulae, $R^2$ has the same meaning as in the general formula (I').

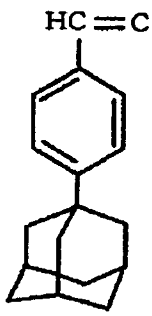

(I a)

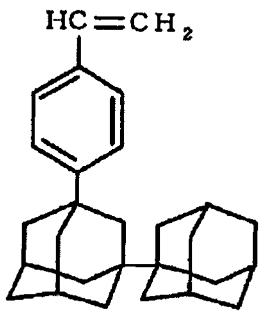

(I b)

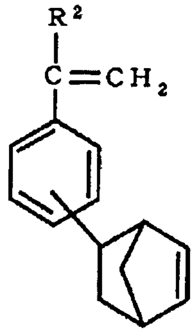

(I c)

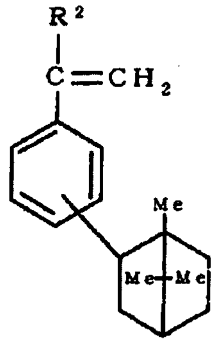

(I d$_1$)

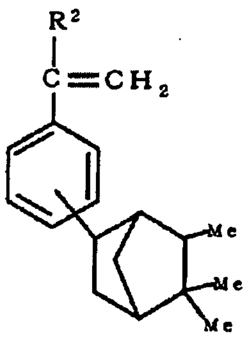

(I d$_2$)

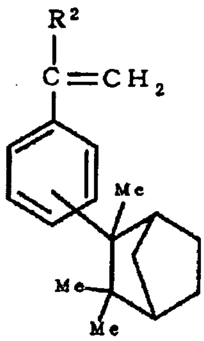

(I d$_3$)

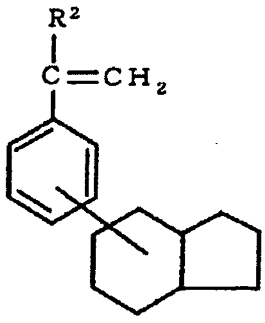

(I e$_1$)

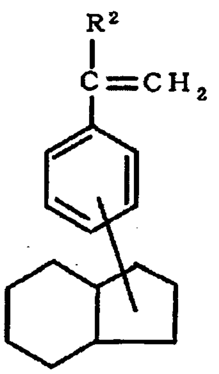

(I e$_2$)

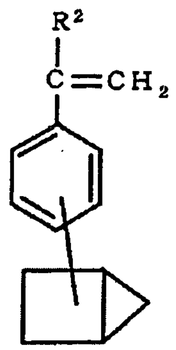

(I f)

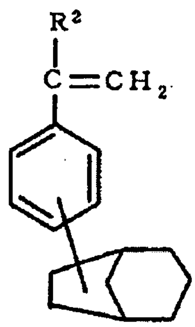

(I g$_1$)

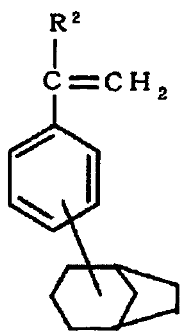

(I g$_2$)

A block copolymer or graft copolymer comprising as a constituent polymer block (C) comprising as a main repeating unit a styrene derivative unit represented by the general formula (I) wherein $R^1$ is an alicyclic hydrocarbonic group having a polycyclic structure, particularly a bridged alicyclic hydrocarbonic group, is excellent in heat resistance, and, among them, a block copolymer or graft copolymer comprising as a constituent polymer block (C) comprising as a main repeating unit a styrene derivative unit represented by the general formula (I) wherein $R^1$ is an adamantyl group or a biadamantyl group, is particularly excellent in heat resistance, and, further, a block copolymer or graft copolymer comprising as a constituent polymer block (C) comprising as a main repeating unit a structural unit derived from 1-(4-vinylphenyl)adamantane [another nomenclature: 4-(1-adamantyl)styrene] represented by the above chemical formula (Ia) or 3-(4-vinylphenyl)-1,1'-biadamantane represented by the above chemical formula (Ib), particularly 1-(4-vinylphenyl) adamantane, has an advantage that it is particularly excellent in heat resistance, and, at the same time, the monomer

is easy to prepare.

Styrene derivatives represented by the general formula (I') can be used alone respectively or in a combination of two or more. The form of copolymerization in the case wherein two or more are copolymerized can be random copolymerization, block copolymerization, graft copolymerization or tapered copolymerization.

Polymer block (C) can contain monomer unit(s) other than the styrene derivative unit represented by the general formula (I) in such a range that the function as a restraining phase is not disturbed. As monomers giving such other monomer unit(s), there can, for example, be mentioned conjugated alkadienes having 4 to 8 carbon atoms (specific examples are the same as in the description of polymer block (B) mentioned previously); (meth)acrylic esters (methyl (meth)acrylate, ethyl (meth)acrylate, butyl (meth)acrylate, etc.); vinyl esters (vinyl acetate, vinyl propionate, vinyl butyrate, vinyl pivalate, etc.); vinyl ethers (methyl vinyl ether, isobutyl vinyl ether, etc.); etc. The form of copolymerization of the styrene derivative (I') with said other monomer(s) needs to be random copolymerization.

In view of attaining the function as a restraining phase, the proportion of styrene derivative unit (I) in polymer block (C) is preferably 50 % by mass or more, more preferably 70 % by mass or more and still more preferably 90 % by mass or more.

In view of making polymer block (C) micro phase separate from polymer block (A) and polymer block (B) and function as a restraining phase, particularly preferred examples of polymer block (C) include a poly-1-(4-vinylphenyl) adamantane block, a poly-3-(4-vinylphenyl)-1,1'-biadamantane block, a copolymer block comprising 1-(4-vinylphenyl) adamantane and poly-3-(4-vinylphenyl)-1,1'-biadamantane in an optional mutual proportion, etc.

Polymer block (C) can be cross-linked according to a known method in such a range that the effects of the invention are not spoiled. By introduction of cross-linking, such a tendency occurs that the restraining strength is further heightened, and durability and heat resistance are further improved, and, moreover, change of the dynamic characteristics (tensile characteristics) between during a dry state and during a wet state, and, further, change of characteristics such as methanol permeability between before and after treatment with a methanol solution are further diminished.

The molecular weight of polymer block (C) is suitably chosen depending on the nature and state, desired performance, other polymer components, etc. of the polymer electrolyte. When the molecular weight is large, dynamic characteristics of the polymer electrolyte tend to be higher, but when the molecular weight is too large, the block copolymer or graft copolymer is hard to mold, whereas when the molecular weight is small, the dynamic characteristics tend to be lowered, and it is important to suitably choose the molecular weight in accordance with necessary performance. Usually, the molecular weight of polymer block (C) is preferably chosen between 100 and 1,000,000, and more preferably chosen between 1,000 and 100,000, as number average molecular weight in terms of polystyrene.

The structure of a block copolymer composed of polymer block (A), polymer block (B) and polymer block (C) is not particularly limited, and, as examples, there can be mentioned an A-B-C triblock copolymer, an A-B-C-A tetrablock copolymer, an A-B-A-C tetrablock copolymer, a B-A-B-C tetrablock copolymer, an A-B-C-B tetrablock copolymer, an C-B-C-A tetrablock copolymer, an C-A-B-A-C pentablock copolymer, an C-B-A-B-C pentablock copolymer, an A-C-B-C-A pentablock copolymer, an A-C-B-A-C pentablock copolymer, an A-B-C-A-B pentablock copolymer, an A-B-C-A-C pentablock copolymer, an A-B-C-B-C pentablock copolymer, an A-B-A-B-C pentablock copolymer, an A-B-A-C-B pentablock copolymer, a B-A-B-A-C pentablock copolymer, a B-A-B-C-A pentablock copolymer, a B-A-B-C-B pentablock copolymer, an C-A-C-B-C pentablock copolymer, etc.

The structure of a graft copolymer composed of polymer block (A), polymer block (B) and polymer block (C) is not particularly limited as in the block copolymer. As the structure of the graft copolymer, there can be mentioned such a structure that one of polymer blocks (A), (B) and (C) is a stem and the other two are branches, such a structure that onto one stem, another one is grafted to form a first branch, and the remaining one is grafted onto the first branch to form a second branch, and so on.

As to cases of combination of a block copolymer and a graft copolymer, there can be mentioned such a structure that, among polymer block (A), polymer block (B) and polymer block (C), two are block copolymers, and the remaining one is grafted onto the block copolymers as stems to form a branch, and so on.

These block copolymers and graft copolymer can be used alone respectively or in a combination of two or more.

When the block copolymer or graft copolymer in the invention has two or more polymer blocks (A), these blocks can mutually have the same or different structure, molecular weight or the like. When the block copolymer or graft copolymer has two or more polymer blocks (B), these blocks can mutually have the same or different structure, molecular weight or the like. When the block copolymer or graft copolymer in the invention has two or more polymer blocks (C), these blocks can mutually have the same or different structure, molecular weight or the like.

In the block copolymer or graft copolymer composing the polymer electrolyte of the invention, the mass ratio of the sum of polymer block (A) and polymer block (C) to polymer block (B) is preferably 90 : 10 to 10 : 90, more preferably 85 : 15 to 15 : 85 and still further preferably 80 : 20 to 20 : 80, in view of giving flexibility or elasticity and thus good moldability in production of membrane electrode assemblies and polymer electrolyte fuel cells.

In the block copolymer or graft copolymer composing the polymer electrolyte of the invention, the mass ratio of polymer block (C) to polymer block (B) is preferably 95 : 5 to 5 : 95, more preferably 90 : 10 to 10 : 90 and still further

preferably 85 : 15 to 15 : 85, in view of dimensional stability, shape and form stability, durability and/or heat resistance.

The number average molecular weight of the block copolymer or graft copolymer composing the polymer electrolyte of the invention, in a state that an ion-conductive group is not introduced, is not particularly limited, but, usually, is preferably 10,000 to 2,000,000, more preferably 15,000 to 1,000,000 and still more preferably 20,000 to 500,000 as number average molecular weight in terms of polystyrene.

The block copolymer or graft copolymer composing the polymer electrolyte of the invention needs to have ion-conductive groups in polymer block (A). When ion conductivity is referred to in the invention, the ion includes protons, etc. The ion-conductive groups are not particularly limited so long as they are such groups that a membrane-electrode assembly produced using a polymer electrolyte membrane comprising the polymer electrolyte can display sufficient ion conductivity, but among them, a sulfonic acid group or a phosphonic acid group or their salts represented by $-SO_3M$ or $-PO_3HM$ wherein M represents a hydrogen atom, an ammonium ion or an alkali metal ion, can be used preferably. As the ion-conductive group, a carboxyl group or its salts can also be used. The reason why polymer block (A) is chosen as the site of introduction of ion-conductive groups is that introduction of ion-conductive groups is easy and formation of ion channels is made to be easy.

As to the position of introduction of an ion-conductive group into polymer block (A), there is no particular restriction, and it can be introduced either into the aromatic vinyl compound unit as the main repeating unit or into the afore-mentioned other monomer units, but in view of making formation of ion channels easy and inhibition of methanol crossover (a phenomenon that methanol as a fuel permeates the electrolyte membrane from one electrode side to the other electrode side) in direct methanol polymer electrolyte fuel cells, it is preferred to introduce the ion-conductive group into the aromatic ring of the aromatic vinyl compound unit.

In the invention, ion-conductive groups exist substantially only in polymer block (A). This is partly for making formation of ion channels easy, and partly for largely inhibiting change in structure of the ion channels after long-time power generation by substantially limiting the site of formation of ion channels to polymer block (A) and making polymer block (C) substantially function as a restraining phase. When the ion channels become large by change in structure, there arises a tendency that methanol is liable to permeate and power generation efficiency becomes lower. In the invention, the wording that ion-conductive groups exist substantially only in polymer block (A) is assumed to mean that 75 % by mol or more, preferably 90 % by mol or more of ion-conductive groups existing in the block copolymer exist in polymer block (A).

The amount of ion-conductive groups introduced is important for determining the performance of the polymer electrolyte. In order to attain sufficient ion conductivity to use the polymer electrolyte of the invention as a polymer electrolyte membrane for polymer electrolyte fuel cells, the ion exchange capacity of the polymer electrolyte of the invention is preferably 0.30 meq/g or more, and more preferably 0.35 meq/g or more. As to the upper limit of the ion exchange capacity, since the ion exchange capacity becomes too large, a tendency occurs that hydrophilicity increases and the polymer electrolyte easily swells, it is preferred that the ion exchange capacity is 3.0 meq/g or less.

The block copolymer or graft copolymer used in the invention can be obtained mainly according to the following preparation process. Namely, the process is a process which comprises preparing a block copolymer or graft copolymer having no ion-conductive group and then bonding an ion-conductive group.

First, processes of preparing a block copolymer or graft copolymer having no ion-conductive group are described.

Depending on the kind, molecular weight, etc. of monomer(s) constituting polymer block (A), (B) or (C), the process of preparing polymer block (A), (B) or (C) is appropriately chosen from a radical polymerization method, an anionic polymerization method, a cationic polymerization method, a coordination polymerization method and so on, but in view of industrial easiness, a radical polymerization method, an anionic polymerization method or a cationic polymerization method is preferably chosen. Particularly, in view of molecular weight, molecular weight distribution, the structure of the polymer, easiness of bond among polymer block (A), (B) and (C) and so on, a so-called living polymerization method is preferred, and, specifically, a living radical polymerization method, a living anionic polymerization method or a living cationic polymerization method is preferred.

Described below as a specific example of the preparation process is, a process of preparing a block copolymer or graft copolymer having as its components a polymer block (C) having as a main repeating unit a styrene derivative unit such as a 1-(4-vinylphenyl)adamantane unit, a polymer block (A) comprising a styrene unit or an $\alpha$-methylstyrene unit and a polymer block (B) comprising a conjugated alkadiene unit. In this case, in view of industrial easiness, molecular weight, molecular weight distribution, easiness of bond among polymer blocks (A), (B) and (C) and so on, it is preferred to prepare such a block copolymer or graft copolymer according to a living anionic polymerization method or a living cationic polymerization method, and specific examples of synthesis as below are shown.

In preparation of a block copolymer or graft copolymer constituting the polymer electrolyte of the invention according to anionic polymerization, there can be adopted/applied

(1) a process of obtaining an A-B-C block copolymer by polymerizing a styrene derivative such as 1-(4-vinylphenyl)adamantane in a cyclohexane solvent under a temperature condition of 10 to 100°C using an anionic polymerization initiator such as an organic lithium compound, and then successively polymerizing a conjugated alkadiene and styrene; or successively polymerizing styrene, a conjugated alkadiene and a styrene derivative in this order,

(2) a process of obtaining a C-A-B-A-C block copolymer by polymerizing a styrene derivative such as 1-(4-vinylphenyl) adamantane in a cyclohexane solvent under a temperature condition of 10 to 100°C using an anionic polymerization initiator such as an organic lithium compound, then successively polymerizing styrene and a conjugated alkadiene, and adding a coupling agent such as phenyl benzoate,

(3) a process of obtaining a C-B(-g-A)-C block and graft copolymer by preparing a C-B-C block copolymer by successively polymerizing a styrene derivative such as 1-(4-vinylphenyl)adamantane, a conjugated alkadiene and a styrene derivative such as 1-(4-vinylphenyl)adamantane in a cyclohexane solvent under a temperature condition of 10 to 100°C using an anionic polymerization initiator such as an organic lithium compound, adding an anionic polymerization initiator such as an organic lithium compound and N,N,N',N'-tetramethylethylenediamine to anionize the conjugated alkadiene unit, and polymerizing styrene,

(4) a process of obtaining an A-B-C block copolymer by polymerizing α-methylstyrene of a concentration of 5 to 50 % by mass in a nonpolar solvent in the presence of a polar compound of a concentration of 0.1 to 10 % by mass at a temperature of -30°C to 30°C using an anionic polymerization initiator such as an organic lithium compound, and successively polymerizing a conjugated alkadiene and a styrene derivative such as 1-(4-vinylphenyl)adamantane with the resulting living polymer,

(5) a process of obtaining an A-C-B-C-A block copolymer by polymerizing α-methylstyrene of a concentration of 5 to 50 % by mass in a nonpolar solvent in the presence of a polar compound of a concentration of 0.1 to 10 % by mass at a temperature of -30°C to 30°C using an anionic polymerization initiator such as an organic lithium compound, successively polymerizing a styrene derivative such as 1-(4-vinylphenyl)adamantane and a conjugated alkadiene with the resulting living polymer, and then adding a coupling agent such as phenyl benzoate, and so on.

In preparation of a block copolymer or graft copolymer constituting the polymer electrolyte of the invention by cationic polymerization, there can be adopted/applied

(6) a process of obtaining an C-A-B-A-C block copolymer by cationically polymerizing isobutene in a mixed solvent of a halogenated hydrocarbon and a hydrocarbon in the presence of a Lewis acid at a temperature of -78°C using a bifunctional halide initiator, and then successively polymerizing styrene and a styrene derivative such as 1-(4-vinylphenyl)adamantane.

Styrene derivatives (I') used in preparation of the block copolymer in the invention can be prepared according to a known method or a method based thereon. For example, 1-(4-vinylphenyl)adamantane represented by the aforementioned chemical formula (Ia) can be prepared according to a process mentioned in "Synthesis", 1998, No.2, 148-152 or JP-A-2006-96988 as shown in the following reaction formula (I) or (II), and 3-(4-vinylphenyl)-1,1'-biadamantane represented by the aforementioned chemical formula (Ib) according to a process mentioned in JP-A-2006-96988 as shown in the following reaction formula (III).

Reaction formula (I):

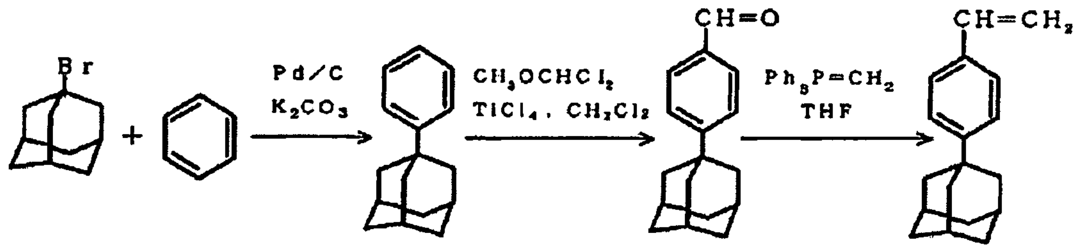


Reaction formula (II):

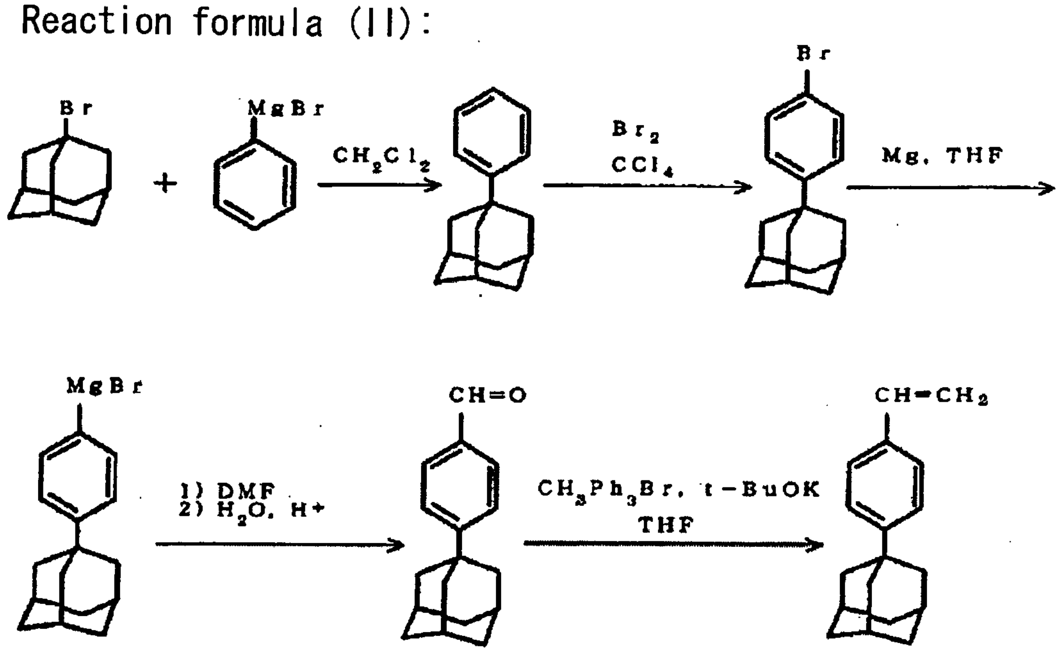


Reaction formula (III):

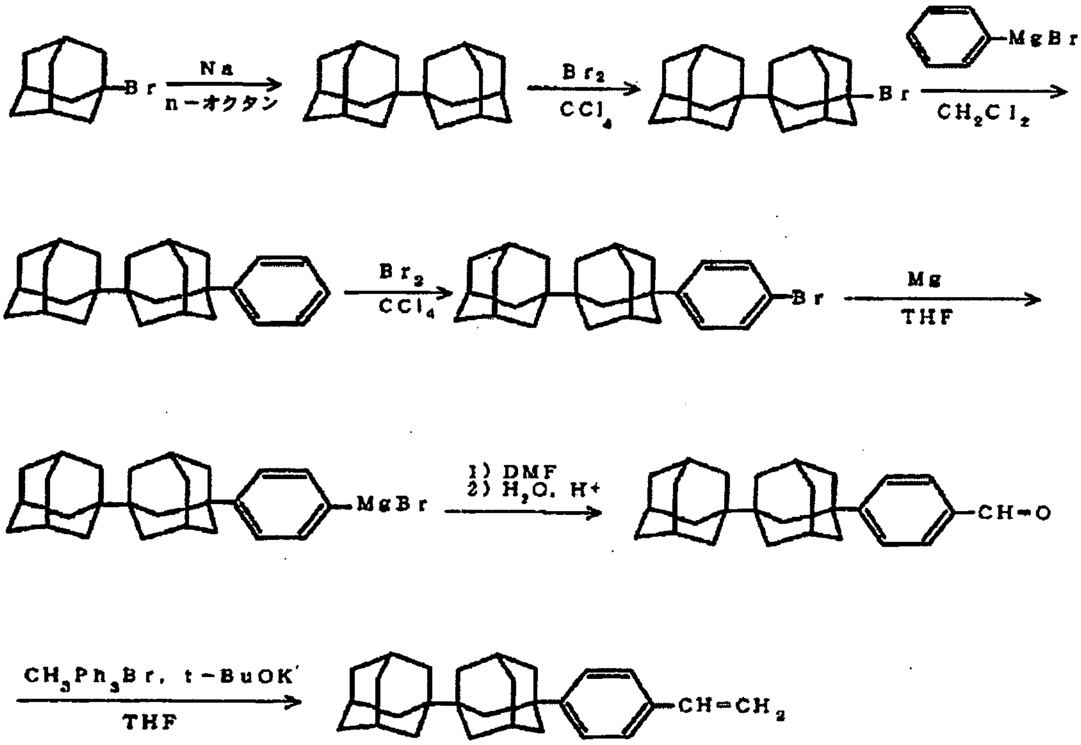


Styrene derivatives (I') other than 1-(4-vinylphenyl)adamantane and 3-(4-vinylphenyl)-1,1'-biadamantane can also be prepared according to processes based on the above reaction formulae (I) to (III).

Processes for bonding an ion-conductive group to the resulting block copolymer or graft copolymer is described

below.
First, a process for introducing a sulfonic acid group into the resulting block copolymer is described. Sulfonation can be conducted by a known sulfonation method. As such methods, there can be exemplified a process of preparing a solution or suspension of the block copolymer or graft copolymer in an organic solvent, and then adding a sulfonating agent and mixing the mixture, a process of directly adding a gaseous sulfonating agent to the block copolymer or graft copolymer, and the like.

As the sulfonating agent to be used, there can be exemplified sulfuric acid, a mixture system of sulfuric acid and an aliphatic acid anhydride, chlorosulfonic acid, a mixture system of chlorosulfonic acid and trimethylsilyl chloride, sulfur trioxide, a mixture system of sulfur trioxide and triethyl phosphate, and, further, an aromatic organic sulfonic acid represented by 2,4,6-trimethylbenzenesulfonic acid, and so on. Further, as the organic solvent to be used, there can be exemplified a halogenated hydrocarbon such as methylene chloride, a straight-chain aliphatic hydrocarbon such as hexane, a cyclic aliphatic hydrocarbon such as cyclohexane, and so on, and they can be used also with an appropriate selection from plural combinations thereof, if necessary.

Next, a process for introducing a phosphonic acid group into the resulting block copolymer or graft copolymer is described. Phosphonation can be conducted by a known phosphonation method. Specifically, there can, for example, be mentioned a process of preparing a solution or suspension of the block copolymer or graft copolymer in an organic solvent, reacting the copolymer with chloromethyl ether or the like in the presence of anhydrous aluminum chloride to introduce halomehtyl groups into the aromatic rings, reacting the resulting copolymer with phosphorus trichloride and anhydrous aluminum chloride added, and then conducting hydrolysis reaction to introduce phosphonic acid groups; and so on. There can further be exemplified a process of adding phosphorus trichloride and anhydrous aluminum chloride to the copolymer and reacting them to introduce phophinic acid groups into the aromatic rings, and then oxidizing the phophinic acid groups into phophonic acid groups with nitric acid; and so on.

As to the degree of sulfonation or phosphonation, it is desirable that sulfonation or phosphonation is made so that the ion exchange capacity of the polymer electrolyte of the invention becomes 0.30 meq/g or more and particularly 0.35 meq/g or more, but 3.0 meq/g or less, as stated previously. Thereby, practical ion conductivity is obtained. The ion exchange capacity of a polymer electrolyte finally obtained, the ion exchange capacity of a sulfonated or phosphonated block copolymer or graft copolymer, and the sulfonation proportion or phosphonation proportion in polymer block (A) in a block copolymer or graft copolymer can be calculated using analytical method(s) such as an acid value titration method, infrared spectroscopy, measurement of nuclear magnetic resonance spectrum ($^1$H-NMR spectrum) and/or the like.

The ion-conductive group can be introduced in the form of a salt neutralized with a proper metal ion (e.g., an alkali metal ion) or a counter ion (e.g., an ammonium ion). For example, a block copolymer or graft copolymer wherein the sulfonic acid group is converted to a salt form can be obtained by ion exchange using a suitable method. Specifically, a block copolymer or the like wherein the sulfonic acid group is converted to a sodium salt form can be obtained by immersing a block copolymer or the like into which a sulfonic acid group is intriduced into salt water or the like.

The polymer electrolyte of the invention can, if necessary, contain, in addition to the block copolymer or graft copolymer used in the invention, a softening agent, in such a range that the effects of the invention are not spoiled. As the softening agent, there are petroleum-type softening agents such as paraffin-, naphthene- or aroma-type process oils; paraffins; vegetable oil-type softening agents; plasticizers; etc., and they can be used alone or in a combination of two or more.

The polymer electrolyte of the invention can, if necessary, further contain, in such a range that the effects of the invention are not spoiled, various additives, for example, phenol-type stabilizers, sulfur-type stabilizers, phosphorus-type stabilizers, light stabilizers, antistatic agents, mold release agents, flame retardants, foaming agents, pigments, dyes, brighteners, carbon fiber, etc. alone in a combination of two or more.

The polymer electrolyte of the invention can, if necessary, further contain, in such a range that the effects of the invention are not spoiled, an inorganic filler. As specific examples of the inorganic filler, there can be mentioned talc, calcium carbonate, silica, glass fiber, mica, kaolin, titanium oxide, montmorillonite, alumina, etc.

The content of the above-mentioned block copolymer or graft copolymer in the polymer electrolyte of the invention is preferably 50 % by mass or more, more preferably 70 % by mass or more and further more preferably 90 % by mass or more, in view of ion conductivity.

This invention also relates to a polymer electrolyte membrane prepared from the polymer electrolyte of the invention. As to a process for preparing the polymer electrolyte membrane of the invention, any process can be adopted so long as it is a usual process for such preparation. For example, there can be used a process which comprises mixing a block copolymer or graft copolymer constituting the polymer electrolyte membrane of the invention, and, if necessary, additive(s) as mentioned above with a suitable solvent to dissolve or suspend the block copolymer or graft copolymer, casting the resulting solution or suspension onto a sheet material such as PET or glass or applying it on such a material using a coater, an applicator or the like, and then removing the solvent under an appropriate condition to obtain an electrolyte membrane having a desired thickness; a process of obtaining an electrolyte membrane using a known method such as hot press forming, roll thermoforming or extrusion molding; and so on. It is also possible to build up a new layer

on the obtained electrolyte membrane layer by applying a solution of a block copolymer or graft copolymer which is the same or different thereon and then drying it. It is further possible to form a laminate by press-bonding the same or different electrolyte membranes obtained in the same way as mentioned above, by roll thermoforming or the like.

A solvent to be used in the above is not particularly restricted so long as it does not destroy the structure of the block copolymer or graft copolymer and is capable of preparing a solution having a viscosity of the order to make its casting or application possible. Specifically, there can be exemplified halogenated hydrocarbons such as methylene chloride; aromatic hydrocarbons such as toluene, xylene and benzene; straight-chain aliphatic hydrocarbons such as hexane and heptane; cyclic aliphatic hydrocarbons such as cyclohexane; ethers such as tetrahydrofuran; and alcohols such as methanol, ethanol, propanol, isopropanol, butanol and isobutyl alcohol; and mixed solvents thereof, etc. According to the constitution, molecular weight, ion exchange capacity, etc. of the block copolymer or graft copolymer, one or a combination of two or more can appropriately be chosen and used among the solvents exemplified above.

The condition of removal of the solvent used can optionally be chosen so long as it is a condition to make it possible to completely remove the solvent at a temperature lower than a temperature at which the ion-conductive groups such as sulfonic acid groups in the block copolymer or graft copolymer constituting the polymer electrolyte membrane of the invention drop off. In order to attain desired physical properties, it is possible to combine plural temperatures optionally and/or combine conditions of under draft and under vacuum and so on optionally. Specifically, there can be exemplified a process of conducting preliminary drying under a vacuum condition of the order of room temperature to 60°C for several hours and then conducting drying under a vacuum condition of 100°C or more, preferably 100 to 120°C for 12 hours or so to remove the solvent; a process of removing the solvent under a drying condition of under draft of 60 to 140°C for the order of several minutes to several hours; etc., but processes for removal of the solvent are not limited thereto.

The thickness of the membrane comprising the polymer electrolyte of the invention is appropriately chosen in accordance with uses. For example, when the membrane is used as an electrolyte membrane for polymer electrolyte fuel cells, in view of necessary performance, membrane strength, handling properties, etc., the thickness is preferably on the order of 5 to 500 μm. When the membrane thickness is less than 5 μm, the mechanical strength of the membrane and the barrier properties of the membrane against a fuel such as a gas or methanol tend to be insufficient. Conversely, when the membrane thickness goes beyond 500 μm and is too thick, the electric resistance of the membrane becomes large and sufficient ion conductivity is not attained, and as a result, the power generation characteristics of the cells tends to be lowered. The membrane thickness is more preferably 10 to 300 μm.

A membrane-electrode assembly using the polymer electrolyte membrane of the invention is described below. As to production of the membrane-electrode assembly, there is no particular restriction, and a known process can be utilized. For example, there can be mentioned a process of applying a catalyst paste containing an ion-conductive binder onto a gas diffusion layer by a printing method or a spraying method and drying the paste to form a bonded product of the catalyst layer and the gas diffusion layer, and then bonding a pair of the bonded products, with each catalyst layer being made to be inside, to both sides of the polymer electrolyte membrane by a hot press or the like; or a process of applying the catalyst paste onto both sides of the polymer electrolyte membrane by a printing method or a spraying method and drying the paste to form a catalyst layer, and then compression-bonding a gas diffusion layer onto each catalyst layer by a hot press or the like. As still another production process, there is a process of applying a solution or suspension containing an ion-conductive binder onto both sides of the polymer electrolyte membrane and/or onto the surfaces of the catalyst layers in a pair of gas diffusion electrodes, sticking the electrolyte membrane and the surfaces of the catalyst layers together, and then bonding them by thermocompression bonding or the like. In this case, the solution or suspension can be applied onto any one or both of the electrolyte membrane and the surfaces of the catalyst layers. As further still another production process, there is a process of applying the above catalyst paste onto a film substrate such as one made of polytetrafluoroethylene (PTFE) and drying the paste to form a catalyst layer, transferring a pair of the catalyst layers on the film substrates onto both sides of the polymer electrolyte membrane by thermocompression bonding, peeling off the film substrates to obtain a bonded product of the electrolyte membrane and the catalyst layers, and then compression-bonding a gas diffusion layer onto each catalyst layer by a hot press. In these processes, it is possible to conduct the above operations in such a state that the ion-conductive groups are made to a salt with a metal such as Na, and restore the proton type by acid treatment after the bonding.

As the ion-conductive binder constituting the membrane-electrode assembly, there can, for example, be used an ion-conductive binder comprising an existing perfluorocarbonsulfonic acid-type polymer such as "Nafion" (registered trade mark, made by Dupont Co.) or "Gore-select" (registered trade mark, made by Gore Co.); an ion-conductive binder comprising a sulfonated polyether sulfone or a sulfonated polyether ketone; an ion-conductive binder comprising a polybenzimidazole impregnated with phosphoric acid or sulfuric acid; or the like. It is also possible to make an ion-conductive binder from the block copolymer or graft copolymer as a main ingredient of the polymer electrolyte membrane of the invention. For further heightening the adhesion between the electrolyte membrane and the gas diffusion electrode, it is preferred to use an ion-conductive binder having a structure the same as or analogous to that of the polymer electrolyte membrane contacting with the gas diffusion electrode.

As to the constitutive materials of the catalyst layer in the membrane-electrode assembly, there is no particular restriction as an electrically conductive material / catalyst support, and, for example, a carbon material is mentioned. As the carbon material, there can be mentioned carbon blacks such as furnace black, channel black and acetylene black; activated carbon; graphite, etc., and these can be used alone or as a mixture of two or more. As the catalyst metal, any metal can be used so long as it is a metal which promotes oxidation reaction of a fuel such as hydrogen or methanol and reduction reaction of oxygen, and there can, for example, be mentioned platinum, gold, silver, palladium, iridium, rhodium, ruthenium, iron, cobalt, nickel, chromium, tungsten, manganese, etc., and their alloys such as a platinum-ruthenium alloy. Among them, platinum or a platinum alloy (e.g., Pt-Ru alloy) is used in many cases. The particle size of a metal as the catalyst is, usually, 10 to 300 angstroms. It is advantageous in view of costs to support such a catalyst on an electrically conductive material / catalyst support such as carbon because of less use amount of the catalyst. If necessary, it is possible to make the catalyst layer contain a water repellent. As the water repellent, there can, for example, be mentioned various thermoplastic resins such as polytetrafluoroethylene, polyvinylidene fluoride, a styrene-butadiene copolymer and a poly (ether ether ketone).

The gas diffusion layer of the membrane-electrode assembly comprises a material having electrical conductivity and gas permeability, and as the material, there can, for example, be mentioned a porous material composed of carbon fiber such as carbon paper or carbon cloth. Such a material can be subjected to water repellent treatment for heightening water repellency.

By inserting a membrane-electrode assembly obtained by a process as mentioned above between electrically conductive separator materials having both roles of separation of the electrode chambers and as passage(s) for supplying gas to the electrodes, a polymer electrolyte fuel cell can be obtained. The membrane-electrode assembly of the invention can be used as a membrane-electrode assembly for polymer electrolyte fuel cells such as a pure hydrogen one using hydrogen as the fuel gas, a methanol-reforming one using hydrogen obtained by reforming methanol, a natural gas-reforming one using hydrogen obtained by reforming natural gas, a gasoline-reforming one using hydrogen obtained by reforming gasoline and a direct methanol one wherein methanol is used directly.
Fuel cells using the polymer electrolyte membrane of the invention are excellent in durability and heat resistance, and can be operated stably at the time of long-time operation. The fuel cells of the invention also have a characteristic to be capable of attaining certain characteristics immediately after the operation circumstance was changed between a dry state and a wet state, and are, therefore, also excellent in starting properties.

## EXAMPLES

The present invention is further specifically described below through referential examples, examples and comparative examples, but the invention is not limited thereto at all. As chemicals (compounds, etc.) used in referential examples, examples and comparative examples, ones of supreme purity which can be obtained were used, and as solvents, sufficiently deaerated ones were used.
Confirmation of structures of products (intermediate compounds, final compounds) obtained in referential examples, measurement of number average molecular weights of polymers obtained in examples and comparative examples, and measurement of ion exchange capacities, membrane strengths, ion conductivities, linear expansion coefficients and methanol permeation rates of polymer electrolytes or polymer electrolyte membranes obtained in examples and comparative examples and a dynamic mechanical test on the polymer electrolyte membranes were conducted as follows.

(1) Confirmation of structure of products

A product formed in the following Referential example 1 (intermediate compound, final compound) was dissolved in heavy chloroform, and the nuclear magnetic resonance spectra of the proton nuclei ($^1H$) and the carbon nuclei ($^{13}C$) were measured at 27°C using a nuclear magnetic resonance apparatus ("BRUCKER DPX300" made by BRUCKER Co.), whereby confirmation of its structure was made. As to part of products formed in Referential example 1, in the confirmation of structure, an infrared absorption spectrum was measured by a KBR method using an infrared ray analysis apparatus "FT/IR-460" made by Nihon Bunko Co., Ltd.

(2) Measurement of number average molecular weight (Mn) and molecular weight distribution (Mw/Mn)

The number average molecular weight (Mn) and weight average molecular weight (Mw) of a polymer were measured using standard polystyrene whose peak molecular weight had been known and using a gel permeation chromatograph (GPC) ("HLC-8220" made by TOSOH CORPORATION) calibrated with the standard polystyrene (developing solvent: tetrahydrofuran, temperature: 40°C). Molecular weight distribution was sought as a ratio (Mw/Mn) of weight average molecular weight (Mw) to number average molecular weight (Mn).

(3) Measurement of ion exchange capacity

Membranes obtained in the examples or the comparative examples were used as samples. A sample was weighed (a (g)) in a glass vessel which can be shut tightly, an excess amount of an aqueous saturated solution of sodium chloride was added thereto, and the mixture was stirred overnight. Hydrogen chloride formed in the system was titrated (b (ml)) with a 0.01 N aqueous NaOH standard solution (titer f) using a phenolphthalein solution as an indicator. The ion exchange capacity of the sample was calculated according to the following equation.

$$\text{Ion exchange capacity (meq/g)} = (0.01 \times b \times f) / a$$

(4) Measurement of membrane strength

One of membranes obtained in the examples or the comparative examples was molded into a dumbbell shape. The dumbbell shaped molding was kept at 23°C under a relative humidity of 50 % for more than 24 hours to obtain a sample (dry sample), or was kept in water for more than 24 hours to obtain a sample (wet sample). On both samples, breaking strength was measured under a condition of a pulling rate of 500 mm/min.

(5) Measurement of ion conductivity of membrane

Membranes obtained in the examples or the comparative examples were used as samples. A sample of 1cm×4cm was put between a pair of platinum electrodes, and the composite was set in an open-air cell. The resulting open-air cell was placed in water of a temperature 40°C, and the ion conductivity of the sample was measured by an alternating current impedance method.

(6) Test on stability of ion conductivity of membranes

Membranes obtained in the examples or the comparative examples were used as samples. A sample of 1cm×4cm was put between a pair of platinum electrodes, and the composite was set in an open-air cell. The resulting open-air cell was placed in a constant temperature and constant humidity chamber whose inside temperature and relative humidity were adjusted to 40°C and 50 %, respectively, and the ion conductivity of the sample was measured. Then, the open-air cell was placed in water of a temperature of 40°C, the ion conductivity of the sample was measured with lapse of time, and time which elapsed before the percentage of change of ion conductivity in one minute became 1 % or less was assumed to be stabilization time.

(7) Measurement of linear expansion coefficient

Membranes obtained in the examples or the comparative examples were used as samples. A sample was kept at 23°C under a relative humidity of 50 % for more than 12 hours, cut into a piece of 1cm×4cm and immersed in a 10M-MeOH aqueous solution for 4 hours. Then, the length in the direction of the long side of the test piece (b (cm)) was measured and its linear expansion coefficient was calculated according to the following equation.

$$\text{Linear expansion coefficient (\%)} = (b-4)/4 \times 100$$

(8) Measurement of methanol permeation rate

A methanol permeation rate was calculated by setting a membrane obtained in one of the examples or the comparative examples in the center of an H-type cell, putting 55 ml of a 3 M (mol/liter) aqueous methanol solution in one of the resulting two spaces and 55 ml of pure water in the other space, stirring both liquids at 25°C and measuring the amount of methanol diffusing through the electrolyte membrane into the pure water using gas chromatography (the area of the membrane: 4.5 $cm^2$).

(9) Dynamic mechanical test

Storage modulus E', loss elastic modulas E" and loss tangent tan δ were measured under a tensile mode

(frequency: 11Hz) at a temperature rise rate of 3°C /min using one of membranes obtained in the examples and the comparative examples and using a rheometer ("DVE-V4FT Rheospectrer" made by Rheology Co.), and the peak temperature of the loss tangent was assumed to be Ta (°C). Ta is a characteristic value showing heat resistance of a polymer and being analogous to glass transition temperature.

(10) Evaluation of the power generation performance of a single cell for fuel cells

As to the single cell for polymer electrolyte fuel cells produced in (d) of Example 1, power generation performance was evaluated. A test was conducted using hydrogen in the anode under a condition of a supply amount of 250 ml/min, a bubbler water temperature of 80°C and opening to the atmosphere, and using air in the cathode under a condition of a supply amount of 800 ml/min, a bubbler water temperature of 80°C and opening to the atmosphere.

Referential example 1

Preparation of 1-(4-vinylphenyl)adamantane

1-(4-vinylphenyl)adamantane (20g) was synthesized in the same manner as in the process described in JP-A-2006-96988.

Example 1

(a) Synthesis of a block copolymer comprising polystyrene (polymer block (A)), hydrogenated polyisoprene (polymer block (B)) and poly[1.(4.vinylphenyl)adamantane] (polymer block (C))

After 526 ml of dehydrated cyclohexane and 2.89 ml of sec-butyllithium (1.3M-cyclohexane solution) were put in a 1,400-ml autoclave, a cyclohexane solution of 1-(4-vinylphenyl)adamantane (1-(4-vinylphenyl)adamantane: 27g, cyclohexane: 200ml), 27.5 ml of styrene and 70.4 ml of isoprene were added successively to subject each of them to polymerization at 45°C, and then 35.3 ml of a solution of 3 % by mass of phenyl benzoate in cyclohexane was added to conduct coupling reaction, whereby a poly(1-(4-vinylphenyl)adamantane)-b-polystyrene-b-polyisoprene-b-polystyrene-b-poly(1-(4-vinylphenyl)adamantane) (hereinafter, abbreviated as AdSSISAdS) was synthesized. The number average molecular weight (GPC measurement, in terms of polystyrene) of the obtained AdSSISAdS was 136,400, and the amount of the 1,4-bond of the polyisoprene, the content of the styrene unit and the content of the 1-(4-vinylphenyl) adamantane unit determined by $^1$H-NMR measurement were 94.0 %, 24.7 % by mass and 26.8 % by mass, respectively. A solution of the synthesized AdSSISAdS in cyclohexane was prepared, the solution was put in a pressure proof vessel whose inside atmosphere had sufficiently been replaced with nitrogen, and then, hydrogenation reaction was conducted at 50°C for 12 hours in an atmosphere of hydrogen using an Ni/Al Ziegler hydrogenating catalyst to obtain a poly (1-(4-vinylphenyl)adamantane)-b-polystyrene-b-hydrogenated polyisoprene-b-polystyrene-b-poly(1-(4-vinylphenyl)adamantane) (hereinafter, abbreviated as AdSSEPSAdS). The hydrogenation proportion of the AdSSEPSAdS was calculated by $^1$H-NMR spectrum measurement to be 99.9 %.

(b) Synthesis of a sulfonated product of a block copolymer comprising polystyrene (polymer block (A)), hydrogenated polyisoprene (polymer block (B)) and poly[1-(4-vinylphenyl)adamantanel (polymer block (C))

45 g of the block copolymer obtained in (a) (AdSSEPSAdS) was vacuum dried for 1 hour in a glass-made reaction vessel equipped with a 5-L stirrer, the inside atmosphere of the reaction vessel was replaced with nitrogen, 481 ml of methylene chloride was added, and the mixture was stirred at room temperature for 2 hours to dissolve the block copolymer. 179 ml of a sulfonating reagent prepared by reacting 59.8 ml of acetic anhydride with 26.8 ml of sulfuric acid at 0°C in 120 ml of methylene chloride was gradually added dropwise to the above AdSSEPSAdS solution over a period of 5 minutes. After stirring at room temperature for 72 hours, 1L of distilled water was added to the reaction system to stop the reaction. Then, a cooling tube and a cooling trap were set to the reaction vessel, and, under stirring at a temperature of 40 to 70°C, methylene chloride was distilled off to coagulate and deposit a sulfonated product. The deposited solid matter was washed with methanol for 60 minutes, and then filtered. This operation of washing and filtration was repeated five times to completely remove the remaining acid. The polymer after the final filtration was vacuum dried to obtain a sulfonated AdSSEPSAdS. The 1-(4-vinylphenyl)adamantane units of the obtained sulfonated AdSSEPSAdS were not sulfonated, and only the styrene units were sulfonated. The sulfonation proportion of the benzene rings in the styrene units was 100% by mol from $^1$H=NMR analysis and the ion exchange capacity was 1.98 meq/g.

(c) Preparation of an electrolyte membrane for fuel cells

A 11 % by mass solution in toluene/isobutyl alcohol (mass ratio 8/2) of the sulfonated AdSSEPSAdS obtained in (b) was prepared, and the solution was applied on a PET film after a mold releasing treatment ("Toyobo Ester Film K1504" made by Toyobo Co.) at a thickness of about 650 μm, and sufficiently dried at room temperature and then sufficiently vacuum dried to obtain a membrane of 30 μm thickness.

(d) Production of a single cell for polymer electrolyte fuel cells

A single cell for polymer electrolyte fuel cells was produced according to the following procedure. A carbon-supported Pt catalyst (TEC10E50E made by Tanaka Noble Metal Co.) was mixed with a Nafion dispersion (DE2021 made by DuPont Co.) so that the mass ratio of Pt to Nafion could be 1:1, and the catalyst was uniformly dispersed by a ball mill to prepare a paste. Then, this paste was applied on carbon paper (HGP-H-060 made by Toray Industries, Inc.) treated with PTFE (D-1, 60% by mass dispersion made by DAIKIN INDUSTRIES, LTD.) so that the proportion of PTFE could be 20% by mass, using a coater (the amount of Pt applied on the carbon paper: 0.57 mg/$cm^2$), and the resulting carbon paper was cut out into 5cm×5cm to prepare an electrode. The electrolyte membrane for fuel cells prepared in (c) was cut out into 9cmx9cm, the cut out membrane was put between two sheets of the electrodes prepared in the above, and bonding was made by hot pressing (115°C, 8min, 1MPa) to produce a membrane-electrode assembly. Then, a single cell was produced using as a separator graphite carbon having a single groove serpentine passage and using a silicone-made gasket having a thickness of 175μm.

<u>Example 2</u>

(a) Preparation of a block copolymer comprising polystyrene (polymer block (A)), hydrogenated polyisoprene (polymer block (B)) and poly[1-(4-vinylphenyl)adamantane] (polymer block (C))

After 29 ml of dehydrated cyclohexane and 0.17 ml of sec-butyllithium (1.3M-cyclohexane solution) were put in a 200-ml egg-plant type flask equipped with a three way cock, a cyclohexane solution of 1-(4-vinylphenyl)adamantane (1-(4-vinylphenyl)adamantane 2.34g, cyclohexane 40ml), 0.86 ml of styrene and 4.24 ml of isoprene were added successively to subject each of them to polymerization at 45°C, and then 0.8 ml of a solution of 3 % by mass of phenyl benzoate in cyclohexane was added to conduct coupling reaction, whereby a poly (1-(4-vinylphenyl)adamantane)-b-polystyrene-b-polyisoprene-b-polystyrene-b-poly (1-(4-vinylphenyl)adamantane)(AdSSISAdS) was synthesized. The number average molecular weight (GPC measurement, in terms of polystyrene) of the obtained AdSSISAdS was 81,410, and the amount of the 1,4-bond of the polyisoprene, the content of the styrene unit and the content of the 1-(4-vinylphenyl) adamantane unit determined by $^1$H-NMR measurement were 94.0 %, 12.7 % by mass and 40.8 % by mass, respectively. A solution of the synthesized AdSSISAdS in cyclohexane was prepared, the solution was put in a pressure proof vessel whose inside atmosphere had sufficiently been replaced with nitrogen, and then, hydrogenation reaction was conducted at 50°C for 12 hours in an atmosphere of hydrogen using an Ni/Al Ziegler hydrogenating catalyst to obtain a poly (1-(4-vinylphenyl)adamantane)-b-polystyrene-b-hydrogenated polyisoprene-b-polystyrene-b-poly(1-(4-vinylphenyl)adamantane)(hereinafter abbreviated as AdSSEPSAdS). The hydrogenation proportion of the AdSSEPSAdS was calculated by $^1$H-NMR spectrum measurement to be 99.9 %.

(b) Synthesis of a sulfonated product of a block copolymer comprising polystyrene (polymer block (A)), hydrogenated polyisoprene (polymer block (B)) and poly[1-(4-vinylphenyl)adamantane] (polymer block (C))

5.47g of the block copolymer obtained in (a) (AdSSEPSAdS) was vacuum dried for 1 hour in a 500-ml glass-made reaction vessel equipped with a stirrer, the inside atmosphere of the reaction vessel was replaced with nitrogen, 52.6 ml of methylene chloride was added, and the mixture was stirred at room temperature for 2 hours to dissolve the block copolymer. 8.7ml of a sulfonating reagent prepared by reacting 8.40 ml of acetic anhydride with 3.76 ml of sulfuric acid at 0°C in 16.8 ml of methylene chloride was gradually added dropwise to the above AdSSEPSAdS solution. After stirring at room temperature for 72 hours, 200 ml of distilled water was added to the reaction system to stop the reaction. Then, a cooling tube and a cooling trap were set to the reaction vessel, and, under stirring at a temperature of 40 to 70°C, methylene chloride was distilled off to coagulate and deposit a sulfonated product. The deposited solid matter was washed with methanol for 60 minutes, and then filtered. This operation of washing and filtration was repeated five times to completely remove the remaining acid. The polymer after the final filtration was vacuum dried to obtain a sulfonated AdSSEPSAdS. The 1-(4-vinylphenyl)adamantane units of the obtained sulfonated AdSSEPSAdS were not sulfonated, and only the styrene units were sulfonated. The sulfonation proportion of the benzene rings in the styrene units was 100% by mol from $^1$H-NMR analysis and the ion exchange capacity was 1.14 meq/g.

(c) Preparation of an electrolyte membrane for fuel cells

A 18 % by mass solution in toluene/isobutyl alcohol (mass ratio 8/2) of the sulfonated AdSSEPSAdS obtained in (b) was prepared, and the solution was applied on a PET film after a mold releasing treatment ("Toyobo Ester Film K1504" made by Toyobo Co.) at a thickness of about 350 μm, and sufficiently dried at room temperature and then sufficiently vacuum dried to obtain a membrane of 30 μm thickness.

Example 3

(a) Preparation of a block copolymer comprising polystyrene (polymer block (A)), hydrogenated polyisoprene (polymer block (B)) and poly[1-(4-vinylphenyl)adamantane] (polymer block (C))

After 48 ml of dehydrated cyclohexane and 0.16 ml of sec-butyllithium (1.3M-cyclohexane solution) were put in a 500-ml egg-plant type flask equipped with a three way cock, a cyclohexane solution of 1-(4-vinylphenyl)adamantane (1-(4-vinylphenyl)adamantane 3.0g, cyclohexane 21ml), 1.32 ml of styrene and 2.65 ml of isoprene were added successively to subject each of them to polymerization at 45°C, and then 0.94 ml of a solution of 3 % by mass of phenyl benzoate in cyclohexane was added to conduct coupling reaction, whereby a poly (1-(4-vinylphenyl)adamantane)-b-polystyrene-b-polyisoprene-b-polystyrene-b-poly (1-(4-vinylphenyl)adamantane)(AdSSISAdS) was synthesized. The number average molecular weight (GPC measurement, in terms of polystyrene) of the obtained AdSSISAdS was 87,140, and the amount of the 1,4-bond of the polyisoprene, the content of the styrene unit and the content of the 1-(4-vinylphenyl) adamantane unit determined by $^1$H-NMR measurement were 94.0 %, 19.4 % by mass and 50.0 % by mass, respectively A solution of the synthesized AdSSISAdS in cyclohexane was prepared, the solution was put in a pressure proof vessel whose inside atmosphere had sufficiently been replaced with nitrogen, and then, hydrogenation reaction was conducted at 50°C for 12 hours in an atmosphere of hydrogen using an Ni/Al Ziegler hydrogenating catalyst to obtain a poly (1-(4-vinylphenyl)adamantane)-b-polystyrene-b-hydrogenated polyisoprene-b-polystyrene-b-poly(1-(4-vinylphenyl)adamantane)( AdSSEPSAdS). The hydrogenation proportion of the AdSSEPSAdS was calculated by $^1$H-NMR spectrum measurement to be 99.9%.

(b) Synthesis of a sulfonated product of a block copolymer comprising polystyrene (polymer block (A)), hydrogenated polyisoprene (polymer block (B)) and poly[1-(4-vinylphenyl)adamantane] (polymer block (C))

5.1g of the block copolymer obtained in (a) (AdSSEPSAdS) was vacuum dried for 1 hour in a 1 L glass-made reaction vessel equipped with a stirrer, the inside atmosphere of the reaction vessel was replaced with nitrogen, 125 ml of methylene chloride was added, and the mixture was stirred at room temperature for 2 hours to dissolve the block copolymer. 15.9 ml of a sulfonating reagent prepared by reacting 7.50 ml of acetic anhydride with 3.35 ml of sulfuric acid at 0°C in 15 ml of methylene chloride was gradually added dropwise to the above AdSSEPSAdS solution. After stirring at room temperature for 72 hours, 300 ml of distilled water was added to the reaction system to stop the reaction. Then, a cooling tube and a cooling trap were set to the reaction vessel, and, under stirring at a temperature of 40 to 70°C, methylene chloride was distilled off to coagulate and deposit a sulfonated product. The deposited solid matter was washed with methanol for 60 minutes, and then filtered. This operation of washing and filtration was repeated five times to completely remove the remaining acid. The polymer after the final filtration was vacuum dried to obtain a sulfonated AdSSEPSAdS. The 1-(4-vinylphenyl)adamantane units of the obtained sulfonated AdSSEPSAdS were not sulfonated, and only the styrene units were sulfonated. The sulfonation proportion of the benzene rings in the styrene units was 94.5% by mol from $^1$H-NMR analysis and the ion exchange capacity was 1.53 meq/g.

(c) Preparation of an electrolyte membrane for fuel cells

A 20 % by mass solution in toluene/isobutyl alcohol (mass ratio 8/2) of the sulfonated AdSSEPSAdS obtained in (b) was prepared, and the solution was applied on a PET film after a mold releasing treatment ("Toyobo Ester Film K1504" made by Toyobo Co.) at a thickness of about 250 μm, and sufficiently dried at room temperature and then sufficiently vacuum dried to obtain a membrane of 40 μm thickness.

Comparative example 1

(a) Synthesis of a sulfonated SEBS

A sulfonating reagent was prepared by reacting 17.5 ml of acetic anhydride with 7.6 ml of sulfuric acid at 0°C in 34.9 ml of methylene chloride. Separately, 100g of a SEBS (styrene-(ethylene-butylene)-styrene) block copolymer

("Septon 8007" made by KURARAY Co., Ltd.) was vacuum dried for 1 hour in a glass-made reaction vessel equipped with a stirrer, the inside atmosphere of the reaction vessel was replaced with nitrogen, 1,000 ml of methylene chloride was added, and the mixture was stirred at 35°C for 4 hours to dissolve the block copolymer. After the dissolution, the sulfonating reagent was gradually added dropwise over a period of 5 minutes. After stirring at 35°C for 4.5 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated SEBS. The sulfonation proportion of the benzene rings of the styrene units in the sulfonated SEBS was 26.1 % by mol from $^1$H-NMR analysis, and its ion exchange capacity was 0.68 meq/g.

(b) Preparation of an electrolyte membrane for fuel cells

A 5 % by mass solution in THF of the sulfonated SEBS obtained in (a) was prepared, and the solution was cast on a polytetrafluoroethylene sheet at a thickness of about 1,000 μm, sufficiently dried at room temperature and then sufficiently vacuum dried to obtain a membrane of 50 μm thickness.

Comparative example 2

(a) Synthesis of a sulfonated SEPS

A sulfonated SEPS (SEPS: styrene-(ethylene-propylene)-styrene block copolymer) was obtained in the same manner as in (1) of Comparative example 1 except that SEPS ("Septon 2002" made by KURARAY Co., Ltd.) was used and the reaction time was made to be 6 hours. The sulfonation proportion of the benzene rings of the styrene units in the sulfonated SEPS was 32.5 % by mol from $^1$H-NMR analysis, and its ion exchange capacity was 0.84 meq/g.

(b) Preparation of an electrolyte membrane for fuel cells

A 22 % by mass solution in toluene/isobutyl alcohol (mass ratio 8/2) of the sulfonated SEPS obtained in (a) was prepared, and the solution was applied on a PET film after a mold releasing treatment ("Toyobo Ester Film K1504" made by Toyobo Co.) at a thickness of about 450 μm, and sufficiently dried at room temperature and then sufficiently vacuum dried to obtain a membrane of 50 μm thickness.

Comparative example 3

(a) Synthesis of a block copolymer (SEBS) comprising polystyrene (polymer block (A)) and hydrogenated polybutadiene (polymer block (B))

A polystyrene-b-polybutadiene-b-polystyrene (hereinafter, abbreviated as SBS) was synthesized in the same manner as in a reported process (JP-A-2005-281373), using styrene as an aromatic vinyl compound when polymer block (A) was obtained, and using butadiene when polymer block (B) was obtained. The number average molecular weight of the resulting SBS was 69,700, and the amount of the 1,4-bond and the content of the styrene unit determined by $^1$H-NMR measurement were 60.4 %, and 39.6 % by mass, respectively.
A polystyrene-b-hydrogenated polybutadiene-b-polystyrene (hereinafter, abbreviated as SEBS) of a hydrogenation proportion of 99.7% was obtained in the same manner as in the hydrogenation reaction in Example 1(a) except that the synthesized SBS was used and hydrogenation reaction was conducted at 50°C for 7 hours.

(b) Synthesis of a sulfonated SEBS

30g of SEBS obtained in (a) was vacuum dried for 1 hour in a glass-made reaction vessel equipped with a stirrer, the inside atmosphere of the reaction vessel was replaced with nitrogen, 300 ml of methylene chloride was added, and the mixture was stirred at 35°C for 4 hours to dissolve the block copolymer. A sulfonating reagent prepared by reacting 6.7 ml of acetic anhydride with 2.9 ml of sulfuric acid at 0°C in 13.4 ml of methylene chloride was gradually added dropwise over a period of 5 minutes to the above SEBS solution. After stirring at 35°C for 5 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated SEBS. The sulfonation proportion of the benzene rings of the styrene units in the sulfonated SEBS was 27.4 % by mol from $^1$H-NMR analysis, and its ion exchange capacity was 0.94 meq/g.

(c) Preparation of an electrolyte membrane for fuel cells

A membrane of 50 μm thickness was obtained in the same manner as in Comparative example 1(b) except for using the sulfonated SEBS obtained in (b).

Comparative example 4

(a) Synthesis of a sulfonated SEBS

30g of SEBS obtained in Comparative example 3(a) was vacuum dried for 1 hour in a glass-made reaction vessel equipped with a stirrer, the inside atmosphere of the reaction vessel was replaced with nitrogen, 300 ml of methylene chloride was added, and the mixture was stirred at 35°C for 4 hours to dissolve the block copolymer. A sulfonating reagent prepared by reacting 14.6 ml of acetic anhydride with 6.3 ml of sulfuric acid at 0°C in 29.1 ml of methylene chloride was gradually added dropwise over a period of 5 minutes to the above SEBS solution. After stirring at 35°C for 5 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated SEBS. The sulfonation proportion of the benzene rings of the styrene units in the sulfonated SEBS was 50.0 % by mol from $^1$H-NMR analysis, and its ion exchange capacity was 1.61 meq/g.

(b) Preparation of an electrolyte membrane for fuel cells

A membrane of 50 μm thickness was obtained in the same manner as in Comparative example 1(b) except for using the sulfonated SEBS obtained in (a).

Comparative example 5

Nafion film made by DuPont Co. (Nafion 117) was chosen as a perfluorocarbonsulfonic acid polymer electrolyte membrane.

Comparative example 6

Synthesis of a sulfonated product of a block copolymer comprising polystyrene (polymer block (A)), hydrogenated polyisoprene (polymer block (B)) and poly(4-tert-butylstyrene) (polymer block (C))

(a) Synthesis of a block copolymer comprising polystyrene (polymer block (A)), hydrogenated polyisoprene (polymer block (B)) and poly(4-tert-butylstyrene) (polymer block (C))

After 576 ml of dehydrated cyclohexane and 1.78 ml of sec-butyllithium (1.15M-cyclohexane solution) were put in a 1,400-ml autoclave, 32.2 ml of 4-tert-butylstyrene, 13.5 ml of styrene, 81.6 ml of isoprene, 13.4 ml of styrene and 31.5 ml of 4-tert-butylstyrene were added successively to subject them to successive polymerization at 50°C to synthesize a poly(4-tert-butylstyrene)-b-polystyrene-b-polyisoprene-b-polystyrene-b-poly(4-tert-butylstyrene)(hereinafter, abbreviated as tBSSIStBS). The number average molecular weight (GPC measurement, in terms of polystyrene) of the obtained tBSSIStBS was 89,000, and the amount of the 1,4-bond of the polyisoprene, the content of the styrene unit and the content of the 4-tert-butylstyrene unit determined by $^1$H-NMR measurement were 94.1 %, 17.7 % by mass and 43.4 % by mass, respectively.
A solution of the synthesized tBSSIStBS in cyclohexane was prepared, the solution was put in a pressure proof vessel whose inside atmosphere had sufficiently been replaced with nitrogen, and then, hydrogenation reaction was conducted at 50°C for 12 hours in an atmosphere of hydrogen using an Ni/Al Ziegler hydrogenating catalyst to obtain a poly (4-tert-butylstyrene)-b-polystyrene-b-hydrogenated polyisoprene-b-polystyrene-b-poly (4-tert-butylstyrene) (hereinafter, abbreviated as tBSSEPStBS). The hydrogenation proportion of the tBSSEPStBS was calculated by $^1$H-NMR spectrum measurement to be 99.9 %.

(b) Synthesis of a sulfonated product of a block copolymer comprising polystyrene (polymer block (A)), hydrogenated polyisoprene (polymer block (B)) and poly(4-tert-butylstyrene) (polymer block (C))

50g of the block copolymer obtained in (a) (tBSSEPStBS) was vacuum dried for 1 hour in a glass-made reaction

vessel equipped with a stirrer, the inside atmosphere of the reaction vessel was replaced with nitrogen, 480 ml of methylene chloride was added, and the mixture was stirred at 35°C for 2 hours to dissolve the block copolymer. After the dissolution, a sulfonating reagent prepared by reacting 42.5 ml of acetic anhydride with 19.0 ml of sulfuric acid at 0°C in 84.9 ml of methylene chloride was gradually added dropwise thereto over a period of 5 minutes. After reaction at room temperature for 72 hours under stirring, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene units of the sulfonated tBSSEPStBS were not sulfonated, and only the styrene units were sulfonated. The sulfonation proportion of the benzene rings in the styrene units was 100% by mol from $^1$H-NMR analysis and the ion exchange capacity was 1.48 meq/g.

(c) Preparation of an electrolyte membrane for fuel cells

A 16 % by mass solution in toluene/isobutyl alcohol (mass ratio 8/2) of the sulfonated tBSSEPStBS obtained in (b) was prepared, and the solution was applied on a PET film after a mold releasing treatment ("Toyobo Ester Film K1504" made by Toyobo Co.) at a thickness of about 350 μm, and dried at 80°C for 3 minutes by a hot air dryer to obtain a membrane of 30 μm thickness.

Results of tests on performance as polymer electrolyte membranes

The ion conductivities and linear expansion coefficients of the membranes prepared in Examples 1 to 3 and Comparative examples 1 to 4 and 6 and the Nafion membrane of Comparative example 5, and results of the tension test on these membranes are shown in Table 1. In Table 1, the retention proportion of breaking strength (%) was calculated as [Breaking strength (MPa) of the wet sample/Breaking strength (MPa) of the dry sample]×100.

Table 1

| | Block composition A/B/C (wt/wt/wt) | Monomer forming polymer block (C) or corresponding block | Sulfonation proportion (mol%/St) | Ion exchange capacity (meq/g) | Ion conductivity (in water, 40°C) (S/cm) | Tα (°C) | Linear expansion coefficient (%) | Breaking strength | | |
|---|---|---|---|---|---|---|---|---|---|---|
| | | | | | | | | Dry (MPa) | Wet (MPa) | Retention proportion (%) |
| Example 1 | 24/26/50 | c1 | 100 | 1.98 | 0.257 | >200 | 19 | 17.6 | 10.4 | 59 |
| Example 2 | 13/41/46 | c1 | 100 | 1.14 | 0.045 | >200 | 2.5 | 17.6 | 16.4 | 93 |
| Example 3 | 19/50/31 | c1 | 95 | 1.53 | 0.106 | >200 | 3.6 | 18.7 | 12.7 | 68 |
| | | | | | | | | | | |
| Com.exam.1 | 29/71/- | - | 26 | 0.68 | 0.055 | 150 | 13 | 31.7 | 20.4 | 64 |
| Com.exam.2 | 29/71/- | - | 33 | 0.84 | 0.090 | 150 | 10 | 26.6 | 5.30 | 20 |
| Com.exam.3 | 40/60/- | - | 27 | 0.94 | 0.064 | 150 | 16 | 26.9 | 12.3 | 46 |
| Com.exam.4 | 40/60/- | - | 50 | 1.61 | 0.110 | 150 | 30 | 23.0 | 4.20 | 18 |
| Com.exam.5 | - | - | - | 0.91 | 0.120 | 120 | 20 | 35.0 | 24.0 | 69 |
| Com.exam.6 | 18/43/39 | c2 | 100 | 1.48 | 0.116 | 180 | 8.6 | 19.0 | 13.4 | 70 |

c1: 1-(4-vinylphenyl)adamantane c2: 4-tert-butylstyrene Com.exam.: Comparative example

It is apparent from comparison between Examples 1 to 3 and Comparative examples 1 to 5, when ion conductivities and/or ion exchange capacities are equal, the polymer electrolyte membranes of Examples 1 to 3 wherein polymer blocks (C) forming restraining phases exist are greatly improved in retention proportion of breaking strength at the wet time to at the dry time, compared to the membranes prepared from the block copolymers of Comparative examples 1 to 4 having no restraining phase and the Nafion membrane, representative example of electrolyte membranes for fuel cells.
Similarly, it is apparent that linear expansion coefficients which could be an index of dimensional change are also greatly reduced. Moreover, it is apparent that $T\alpha$ values of the high temperature side which are obtained from the dynamic mechanical measurement and could be an index of heat resistance are also greatly enhanced.
It is apparent from comparison between Example 3 and Comparative example 6 wherein ion conductivities and ion exchange capacities are equal that, due to the fact that the restraining phase is formed from the structure unit derived from the styrene derivative having an alicyclic hydrocarbonic group having polycyclic structure, particularly, the linear expansion coefficient as an index of dimensional change could greatly be reduced. Moreover, it is apparent that $T\alpha$ of the high temperature side which is obtained from the dynamic mechanical measurement and could be an index of heat resistance could also greatly be enhanced.
Each of the membranes prepared in Examples 1 to 3 and Comparative example 1 was immersed in an aqueous 10 M (mol/liter) methanol solution at room temperature for 68 hours and sufficiently washed with pure water. On both of the membranes before and after the methanol treatment, the methanol permeation rate of an aqueous 3 M methanol solution was measured. The results are shown in Table 2. In Table 2, the proportion of change in the methanol permeation rate (times) was calculated as (the methanol permeation rate of the aqueous 3 M methanol solution after the treatment with the aqueous 10 M methanol solution ($\mu$mol.cm$^{-2}$.min$^{-1}$) / (the methanol permeation rate of the aqueous 3 M methanol solution before the treatment with the aqueous 10 M methanol solution ($\mu$mol.cm$^{-2}$.min$^{-1}$).
Table 2

| | Ion exchange capacity (meq/g) | 3M-methanol permeation rate ($\mu$ mol/cm$^2$min) | | |
|---|---|---|---|---|
| | | Before treatment with aqueous 10M methanol solution | After treatment with aqueous 10M methanol solution | Proportion of change (times) |
| Example 1 | 1.98 | 49.9 | 50.8 | 1.02 |
| Example 2 | 1.14 | 14.4 | 15.6 | 1.08 |
| Example 3 | 1.53 | 23.9 | 26.3 | 1.10 |
| | | | | |
| Com.exam.1 | 0.68 | 15.0 | 67.0 | 4.47 |

It was made clear that in the membrane of Comparative example 1 prepared from the block copolymer having no restraining phase, the proportion of change of the methanol permeation rate of the membrane after the treatment with the aqueous 10 M methanol solution is large, whereas in the membranes of Examples 1 to 3 prepared from the block copolymers having a restraining phase, the proportion of change of the methanol permeation rate of the membrane after the treatment can be maintained low.
In the case wherein the environment of the membranes prepared in Examples 1 to 3 and Comparative examples 3 and 4 was changed from a dry state (40°C, relative humidity 50 %) to a wet state (40°C, in water), the stabilization times of the ion conductivities of the membranes were measured. The results are shown in Table 3.
Table 3

| | Ion exchange capacity (meq/g) | Ion conductivity (40°C, in water) (S/cm) | Stabilization time (min) |
|---|---|---|---|
| Example 1 | 1.98 | 0.257 | 3 |
| Example 2 | 1.14 | 0.045 | 5 |
| Example 3 | 1.53 | 0.106 | 4 |
| | | | |

(continued)

| | Ion exchange capacity (meq/g) | Ion conductivity (40°C, in water) (S/cm) | Stabilization time (min) |
|---|---|---|---|
| Com.exam.3 | 0.94 | 0.064 | 10 |
| Com.exam.4 | 1.61 | 0.110 | 8 |

It was made clear that in the electrolyte membranes of Examples 1 to 3 prepared from the block copolymers having polymer block (C) forming a restraining phase, time needed to stabilize the ion conductivity can greatly be reduced, compared to the electrolyte membranes of Comparative examples 3 and 4.

As a power generation characteristic of the single cell for polymer electrolyte fuel cells made in (d) of Example 1, change of voltage as against current density was measured. The result is shown in Fig. 1. The maximum power density of the single cell was 423 $mW/cm^2$, and it was made clear that the polymer electrolyte membrane is useful as a polymer electrolyte membrane for polymer electrolyte fuel cells. Further, when the single cell after the power generation test was overhauled, no peeling or the like was observed on the membrane-electrode assembly, and it was made clear that the polymer electrolyte membrane is also excellent in bonding properties.

It was made clear from these results that a membrane prepared from the polymer electrolyte of the present invention is excellent in heat resistance and durability, and, particularly, has advantages that it is stably usable at the time of long-time operation in polymer electrolyte fuel cells, change of dimensions and dynamic characteristics (tensile characteristics, etc.) between during a dry state and during a wet state is small, change in characteristics such as methanol permeability between before and after immersion in a methanol solution is small, and the membrane is also excellent in starting properties, and, therefore, the membrane is very useful as a polymer electrolyte membrane for polymer electrolyte fuel cells.

## BRIEF DESCRIPTION OF THE DRAWINGS

Figure 1 is a drawing showing the current density-output voltage of the single cell for polymer electrolyte fuel cells (Example 1 (d)).

## Claims

1. A polymer electrolyte comprising as a main ingredient a block copolymer or graft copolymer which comprises, as its constituents, a polymer block (A), a polymer block (B) and a polymer block (C) which mutually phase separate, and in which block copolymer or graft copolymer, the polymer block (A) has as a main repeating unit a vinyl compound unit and has ion-conductive groups, the polymer block (B) has as a main repeating unit a vinyl compound unit capable of forming a flexible phase and forms a flexible phase, and the polymer block (C) has as a main repeating unit a styrene derivative unit represented by the following general formula (I) and forms a restraining phase

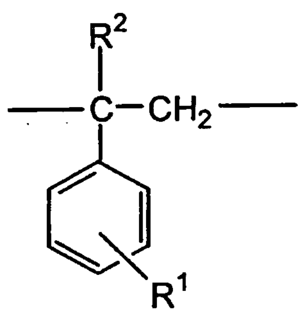

(I)

wherein $R^1$ represents an alicyclic hydrocarbon group having a polycyclic structure, and $R^2$ represents a hydrogen atom, an alkyl group having 1 to 10 carbon atoms or an aryl group.

2. The polymer electrolyte according to claim 1 wherein $R^1$ in the general formula (I) is a bridged alicyclic hydrocarbon group.

3. The polymer electrolyte according to claim 2 wherein $R^1$ is an adamantyl group or a biadamantyl group.

4. The polymer electrolyte according to any one of claims 1 to 3 wherein the vinyl compound unit is an aromatic vinyl compound unit.

5. The polymer electrolyte according to claim 4 wherein the aromatic vinyl compound unit is a unit represented by the following general formula (II)

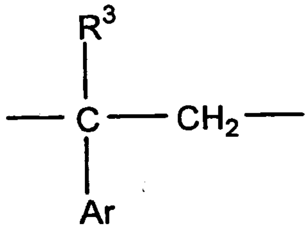

(II)

wherein Ar represents an aryl group which has 6 to 14 carbon atoms and can have 1 to 3 substituents, $R^3$ represents a hydrogen atom, an alkyl group having 1 to 4 carbon atoms or an aryl group which has 6 to 14 carbon atoms and can have 1 to 3 substituents.

6. The polymer electrolyte according to any one of claims 1 to 5 wherein the vinyl compound unit capable of forming a flexible phase in the polymer block (B) is at least one selected from the group consisting of an alkene unit having 2 to 8 carbon atoms, a cycloalkene unit having 5 to 8 carbon atoms, a vinylcycloalkene unit having 7 to 10 carbon atoms, a conjugated alkadiene unit having 4 to 8 carbon atoms and a conjugated cycloalkadiene unit having 5 to 8 carbon atoms; and a vinylcycloalkene unit having 7 to 10 carbon atoms, a conjugated alkadiene unit having 4 to 8 carbon atoms and a conjugated cycloalkadiene unit having 5 to 8 carbon atoms in which units, part or all of carbon-carbon double bonds are hydrogenated.

7. The polymer electrolyte according to claim 6 wherein the vinyl compound unit capable of forming a flexible phase is at least one selected from an alkene unit having 2 to 8 carbon atoms, a conjugated alkadiene unit having 4 to 8 carbon atoms and a conjugated alkadiene unit having 4 to 8 carbon atoms wherein part or all of carbon-carbon double bonds are hydrogenated.

8. The polymer electrolyte according to any one of claims 1 to 7 wherein the mass ratio of the sum of the polymer block (A) and the polymer block (C) to polymer block (B) is 90:10 to 10:90.

9. The polymer electrolyte according to any one of claims 1 to 8 wherein the mass ratio of the polymer block (C) to the polymer block (B) is 95:5 to 5:95.

10. The polymer electrolyte according to any one of claims 1 to 9 wherein the ion-conductive group is a group represented by $-SO_3M$ or $-PO_3HM$ wherein M represents a hydrogen atom, an ammonium ion or an alkali metal ion.

11. The polymer electrolyte according to any one of claims 1 to 10 whose ion exchange capacity is 0.30 meq/g or more.

12. A membrane comprising the polymer electrolyte according to any one of claims 1 to 11.

13. A membrane-electrode assembly wherein the polymer electrolyte membrane according to claim 12 is used.

14. A polymer electrolyte fuel cell wherein the membrane-electrode assembly according to claim 13 is used.

Figure 1

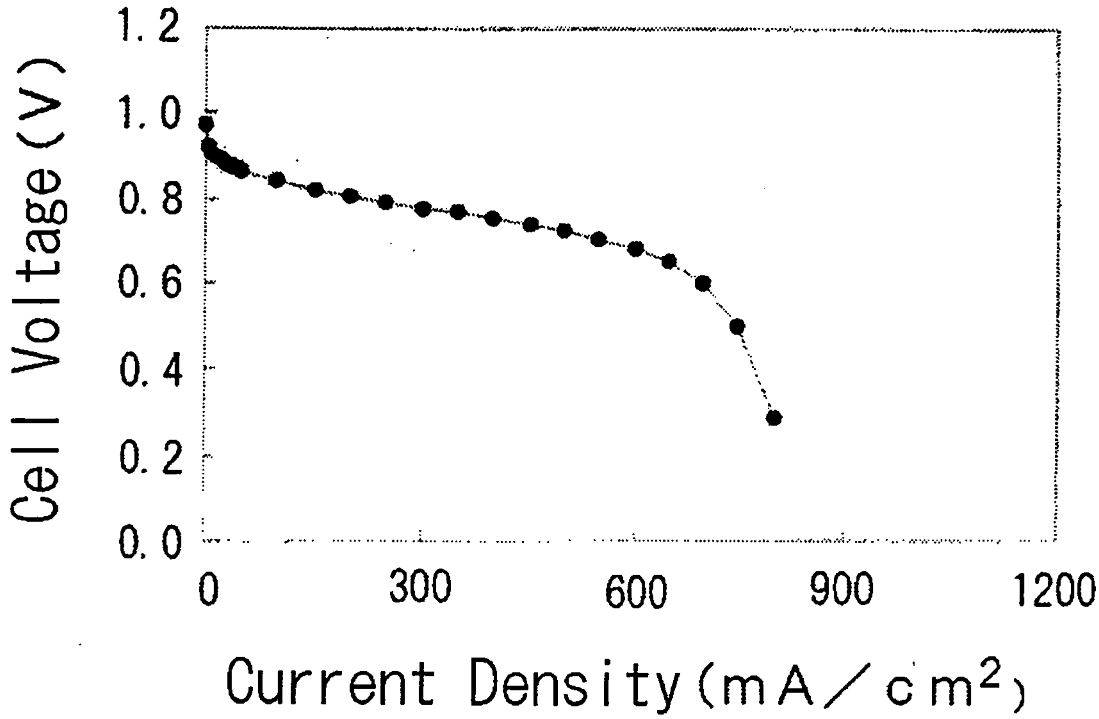
1.2
1.0
0.8
0.6
0.4
0.2
0.0
Cell Voltage (V)
0
300
600
900
1200
Current Density (mA／cm2)

**INTERNATIONAL SEARCH REPORT**

International application No.
PCT/JP2008/060061

A. CLASSIFICATION OF SUBJECT MATTER
*H01M8/02*(2006.01)i, *C08F297/04*(2006.01)i, *H01B1/06*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, C08F297/04, H01B1/06, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-210326 A (Kuraray Co., Ltd.), 10 August, 2006 (10.08.06), & EP 1840993 A1 & WO 2006/070929 A1 | 1-14 |
| A | JP 2004-137444 A (JSR Corp.), 13 May, 2004 (13.05.04), & US 2004/0044166 A1 & EP 1400548 A1 | 1-14 |
| A | JP 2007-39536 A (Toray Industries, Inc.), 15 February, 2007 (15.02.07), (Family: none) | 1-14 |
| P,A | JP 2007-157455 A (Kuraray Co., Ltd.), 21 June, 2007 (21.06.07), (Family: none) | 1-14 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 August, 2008 (22.08.08) | 02 September, 2008 (02.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/060061

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2007-525802 A (The University of North Carolina at Chapel Hill), 06 September, 2007 (06.09.07), & US 2006/0083971 A1 & EP 1751814 A & WO 2005/086632 A2 | 1-14 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6093114 A
- JP 10503788 A
- JP 2006096988 A
- JP 2005281373 A


### Non-patent literature cited in the description


- *J. Membrane Science,* 2002, vol. 197, 231
- *Synthesis,* 1998, 148-152